(19) **Europäisches Patentamt**

**European Patent Office**

**Office européen des brevets**

(11) **EP 0 660 083 B1**

(12) **EUROPEAN PATENT SPECIFICATION**

(45) Date of publication and mention
of the grant of the patent:
**27.09.2000 Bulletin 2000/39**

(51) Int. Cl.⁷: **G01C 21/20**

(21) Application number: **94119147.0**

(22) Date of filing: **05.12.1994**

(54) **Vehicular information display system**

Fahrzeuginformationsanzeigesystem

Système d'affichage d'information pour véhicule

(84) Designated Contracting States:
**DE FR GB**

(30) Priority: **27.12.1993 JP 33282493**
**27.12.1993 JP 33282193**

(43) Date of publication of application:
**28.06.1995 Bulletin 1995/26**

(73) Proprietor: **AISIN AW CO., LTD.**
**Anjo-shi Aichi-ken 444-11 (JP)**

(72) Inventors:
• **Morimoto, Kyomi**
**Nishio-shi, Aichi-ken 445 (JP)**
• **Nanba, Akimasa**
**Chiryu-shi, Aichi-ken (JP)**
• **Maekawa, Kazuteru**
**Nisikamo-gun, Aichi-ken 470-02 (JP)**

(74) Representative:
**VOSSIUS & PARTNER**
**Siebertstrasse 4**
**81675 München (DE)**

(56) References cited:
**EP-A- 0 323 246    EP-A- 0 523 918**

## Description

The present invention relates to a vehicular information display system for controlling the picture of a display unit mounted on a vehicle, in accordance with whether the vehicle is running or stops.

The navigation system guides the driver to visit even a first destination safely by car. In recent years, technical developments have been vigorously made to improve the performances and functions such as the accuracy, operability and visibility of the navigation to propose a variety of systems. This navigation system is equipped with a display screen to be used for setting a route and a display screen to be opened automatically or in response to the request of the driver when the route is being guided. The display screen after the start of guidance includes: a section diagram for guiding a wide area covering sev eral sections including one being followed at present in the whole route having a plurality of sections of the set route; and a node diagram for guiding the driver at a node.

Moreover, the route can be confirmed by providing not only those section diagram and node diagram but also the information on the remaining distance, name and turning directions of a node, at which the vehicle is to be turned, so as to follow the route correctly, by teaching the characteristics so as to confirm the route during the running, by providing the guidance by not only the display but also the voice, by displaying the route on the map, by guiding the route in the actual running, and by scrolling the map automatically along the route.

This navigation system is required to input a starting point and a destination so as to set the route. When the starting point and the destination are determined by this inputting, the route search is executed from road data of the peripheries of the starting point and the destination and the intermediate road data so that the optimum one is set from the plurality of routes. As the method of inputting the starting point and the destination, there have been proposed : the method of inputting a code which is prepared by discriminating a target position to be registered such as the starting point and the destination according to the genres such as the sightseeing, parking area or restaurant and the areas such as the prefecture or city ; the method of inputting the code number ; the method of selecting the items sequentially from the menu displayed ; the method of inputting the position in terms of the coordinate values of east longitude and north latitude by defining the road net having node data connected ; and the method of inputting a telephone number. In another method, not only the route between the two points such as the present position or an arbitrary starting point and the destination is searched, but also the search is made by designating the priority of a transit or an express way.

The system of this kind is exemplified by the telephone number inputting method, as disclosed in JP-A-187898/1990, the genre or code number inputting method, as disclosed in JP-A-173820/1989, the destination setting method by the code number, as disclosed in JP-A-173823/1989, the method of inputting a point to be passed, as disclosed in JP-A-3899/1990, and the inputting method using an infrared ray touch panel, as disclosed in JP-A-173821/1989.

In case the destination is to be set in the navigation system of the prior art, the input key is displayed in the same color in the destination setting picture during the stop and during the running. Moreover, when such one of input keys as is inhibited during the running is touched, the message implying this situation is displayed. Especially in case the user is a beginner, he cannot discriminate the running-operable keys and the running-inoperable keys, even if present in the mixed state, so that he may probably operate the inhibited inoperable keys. Even if the message implying the inoperability is displayed in this case, the user is bewildered because he does not know what input key can be operated.

Since, moreover, the input key may appear as touchable although it is inhibited, the user may be irritated when he carelessly operates to receive the message of inoperability. Furthermore, when the user touches the running-inoperable key after he stops the vehicle, the operation inhibition message may appear in relation to the processing timing of the system if the touch occurs simultaneously with the stop. This may delay the inputting when the user desires to input early.

In document EP-A-0 323 246 there is described a system where, the availablility of menu options is made dependent on the vehicles state of motion.

The present invention contemplates to solve the above-specified problems and has an object to provide a vehicular information display system which is enabled to enhance the safety during the running by making it easy to discriminate a running-inoperable input key.

This object is achieved with the features of the claims.

As a result, only the running-inoperable input keys can be controlled to a different color such as the same color as that of the background so that they can be visibly discriminated from the running-operable ones. Thus, only the input keys which can be operated by a single action in response to a desired instruction can be displayed as the running-operable ones, so that the user can safely operate the input keys displayed in the information display unit. As a result, the user can set the destination such as his home or the previous starting point even during the running while reducing the careless inputting operation.

Furthermore, the display colors during the stop and during the running can be controlled by a single construction to discriminate the running running-operable portion and the running-inoperable portions visually in both the daytime and nighttime.

By changing the display colors without deleting the running-inoperable portions, as described above, the user can be prevented from misunderstanding that the system has gone down as if the display picture were blanked or smeared, even in case all the keys in one screen are inhibited as in the telephone number inputting picture. Moreover, the running-inoperable keys can be given a color such as a dark color different from that of other keys. Then, if the inoperable keys are erroneously operated during the running so that the inhibiting message is displayed to make a caution, the user can recognize that the keys having the displayed color are the inhibited ones and have to be operated during the stop.

Fig. 1 is a block diagram for explaining one embodiment of a vehicular information display device according to the present invention ;
Fig. 2 presents diagrams showing an example of picture transition between the running and the stop by a key operation ;
Fig. 3 is a flow chart for explaining the processing of a stop/run deciding section ;
Fig. 4 is a flow chart for explaining the processing of a touch position detecting section ;
Fig. 5 is a flow chart for explaining the processing of a picture transition control section ;
Fig. 6 is a flow chart for explaining a picture transition processing subroutine ;
Fig. 7 is a flow chart for explaining the processing of a daytime/nighttime deciding section ;
Fig. 8 is a flow chart for explaining the processing of a pallet control section ;
Fig. 9 is a flow chart for explaining the processing of a picture drawing section ;
Fig. 10 is a table enumerating examples of correspondence between picture elements and pallets ;
Fig. 11 presents tables enumerating examples of daytime pallet data ;
Fig. 12 presents tables enumerating examples of nighttime pallet data ;
Fig. 13 is a block diagram for explaining one example of a navigation system to which is applied the information display device of the present invention ;
Fig. 14 presents diagrams showing an example of construction of map display-point information of a data storage section ;
Fig. 15 presents diagrams showing examples of a menu picture and a map display picture ;
Fig. 16 is a block diagram showing an example of the construction of individual units of the navigation system ;
Fig. 17 is a block diagram showing an example of the construction of a software of a central control section ;
Fig. 18 is a flow chart for explaining the processing flow of an input processing section ;

Fig. 19 is a flow chart for explaining a touch panel selecting flow ;
Fig. 20 presents diagrams for explaining an example of a destination setting picture ;
Fig. 21 presents diagrams for explaining an example of picture scrolling ;
Fig. 22 is a diagram for explaining an example of transit setting ;
Fig. 23 presents diagrams for explaining an example of picture scrolling for setting a transit during a route guidance ;
Fig. 24 presents diagrams showing an example of pictures for indexing a telephone number ;
Fig. 25 presents diagrams for explaining an example of the case in which the telephone number is not registered ;
Fig. 26 is a diagram for explaining a processing of the destination setting case ;
Fig. 27 is a diagram for explaining a point setting example for setting a destination ;
Fig. 28 is a flow chart for explaining a change to a map of a scale of 1/40000 ;
Fig. 29 is a flow chart for explaining a change to a detailed map of a scale of 1/40000 ;
Fig. 30 is a flow chart for explaining a change to a detailed map containing a touched area ;
Fig. 31 is a diagram for explaining a touch area detecting processing ;
Fig. 32 is a diagram for explaining a detailed scale deciding processing ; and
Fig. 33 presents diagrams showing a point inputting example of the navigation system of the prior art.

The present invention will be described in the following in connection with its embodiments with reference to the accompanying drawings.

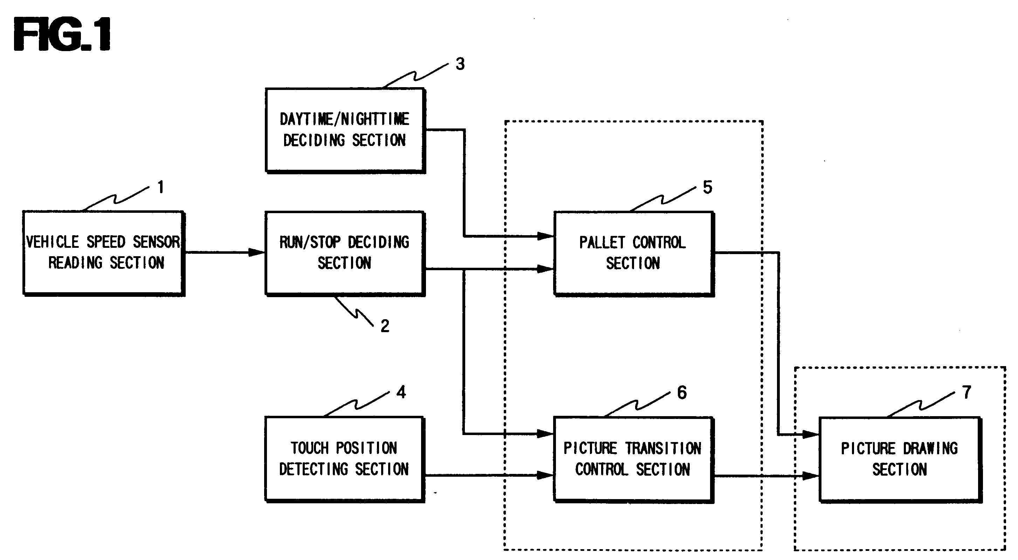

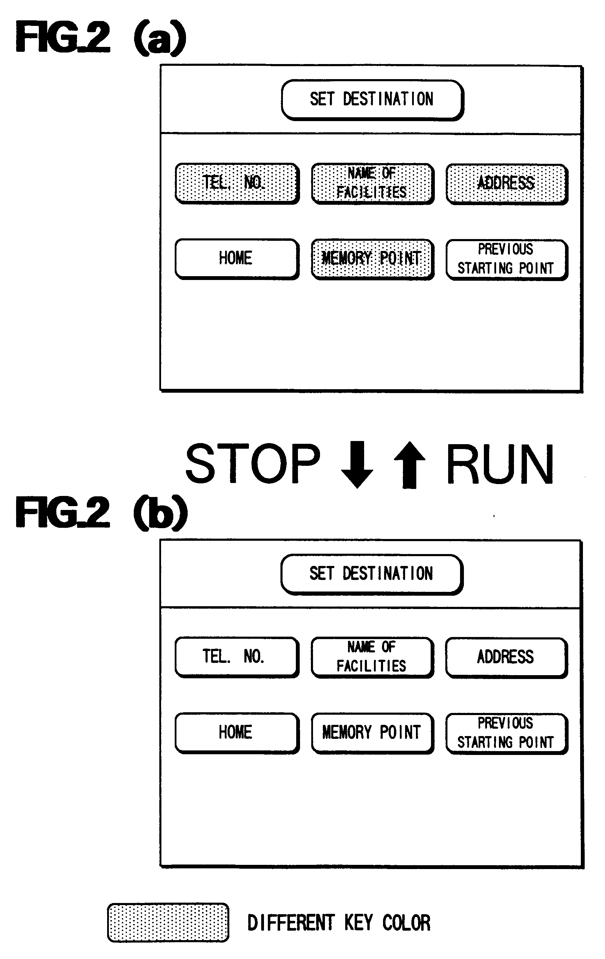

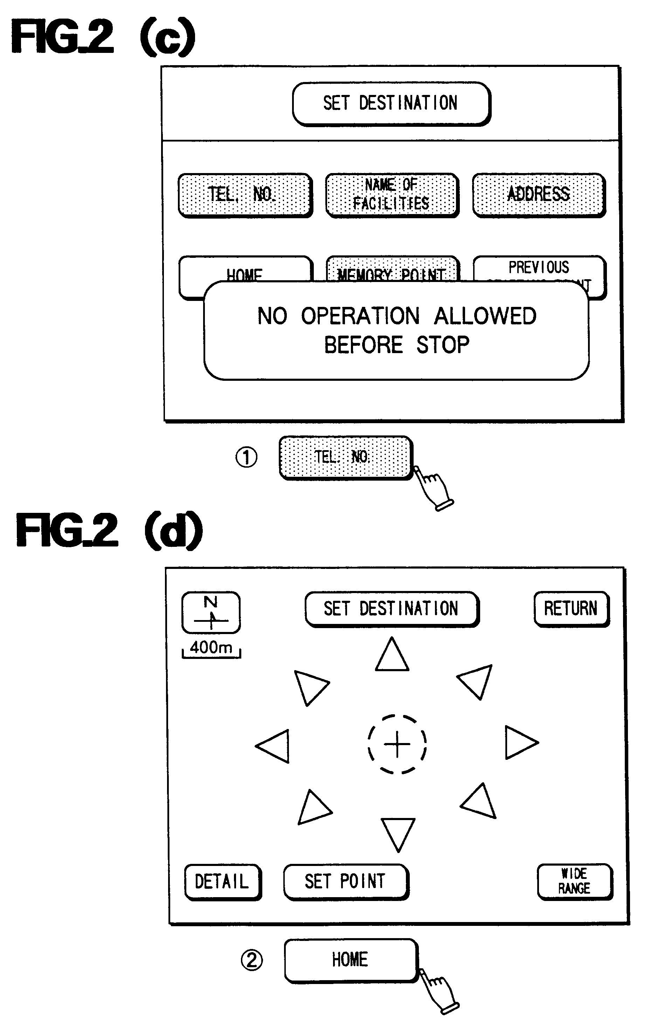

Fig. 1 is a block diagram for explaining one embodiment of a vehicular information display device according to the present invention, and Fig. 2 presents diagrams showing an example of picture transition between the running and the stop by a key operation.

In Fig. 1, a vehicle speed sensor reading section 1 reads the signal of a vehicle speed sensor including a wheel speed meter and an acceleration meter, and a run/stop deciding section 2 decides whether the vehicle is in the running state or in the stop state, from the read signal of the vehicle speed. A daytime/nighttime deciding section 3 decides whether it is at the daytime or at the nighttime, from the state of an illumination meter or a light switch. A touch position detecting section 4 detects the touch position by scanning the vertical and longitudinal lines of a touch panel which is combined with the picture of the display. A pallet control section 5 is equipped with a plurality of pallets set to the colors of individual picture elements, and changes the pallets in dependence upon whether the vehicle is in the running state or in the stop state and whether it is at the daytime or at the nighttime, and a picture transition control section 6 controls the picture transition in dependence upon whether the vehicle is in the running state or in the stop state and the detected content of the touch position. A picture drawing section 7 draws the picture, which is controlled by the picture transition control section 6, in the colors which are set to the pallets of the pallet control section 5.

An example of the picture transition to be controlled by the picture transition control section 6 is shown in Fig. 2. In order for the navigation system to set a route, it is necessary to input and set a starting point and a destination, as has been described before. When the starting point and the destination are determined by that setting, a route search is made from the data of the peripheries of the starting point and the destination and the roads between them, so that an optimum one is set from a plurality of routes. In the destination setting picture to be used in this case, there are displayed input keys for selecting the kinds of input such as "TEL. NO.", "NAME OF FACILITIES", "ADDRESS", "HOME", "MEMORY POINT" or "PREVIOUS STARTING POINT" for setting the destination, as shown in Fig. 2 (a).

The "TEL. NO." key is used when the point registered in advance together with the telephone number is to be set as the destination by inputting the telephone number. The "NAME OF FACILITIES" key is used when the destination is selected and set in terms of the name of facilities such as a city office, a station, a fire station, a police station, a public library, a city hall or a parking area. The "ADDRESS" key is used when an address is designated for setting the destination. The "HOME" key is used when a home registered in advance is set as the destination. The "MEMORY POINT" key is used when an arbitrary point registered in advance by the user is set as the destination. The "PREVIOUS STARTING POINT" key is used for setting the previous starting point as the destination when the vehicle is returned to the starting point. Of these keys, the "HOME" and "PREVIOUS STARTING POINT" can set the destination by a single action, but the remaining input keys are required for a subsequent operation such as for inputting the number or for selecting and inputting the name of facilities.

In the present invention, therefore, the "HOME" and "PREVIOUS STARTING POINT" keys capable of setting the destination by the single action are used as the input keys which are allowed to be operated even during the running, whereas the remaining input keys are used as the input keys which are inhibited to be operated during the running. All the input keys are displayed in a common color during the stop, as shown in Fig. 2 (b). When the running state comes in, only the input keys inhibited to be operated during the running are indicated in a different color, as shown in Fig. 2 (a). In case, moreover, an input key to be inhibited during the running such as the telephone number key is operated, a message "NO OPERATION ALLOWED BEFORE STOP" is displayed, as shown in Fig. 2 (c). In case the "HOME" input key is operated, the point setting input key is displayed, as shown in Fig. 2 (d). When this point setting input key is operated, the destination setting is ended. In this case, an eight-directional cursor Δ is displayed in an unusable color. The pallet is so changed that the color for the inhibited key may be a dark color or an ambiguous color similar to that of letters.

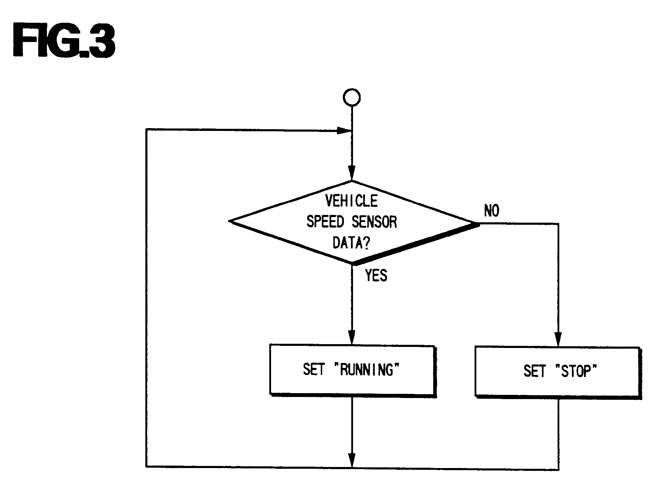

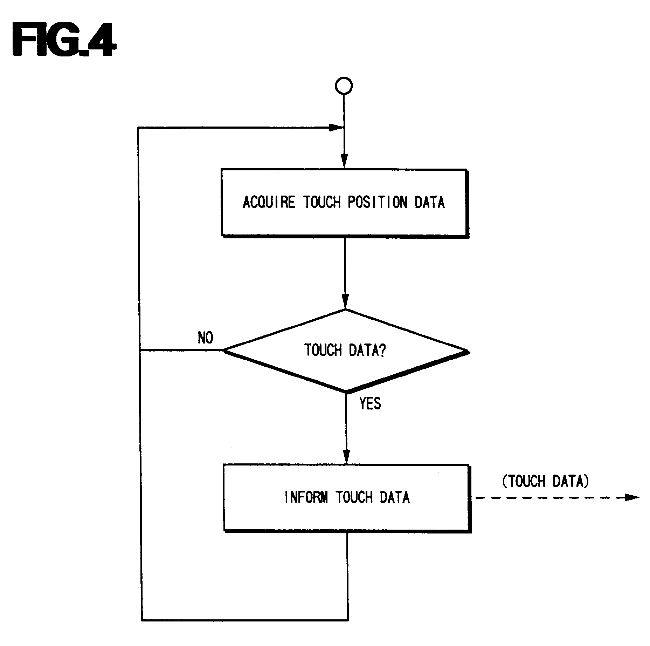

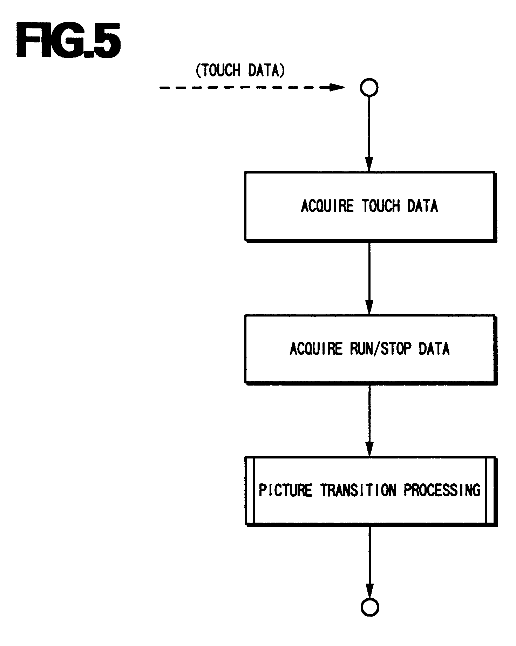

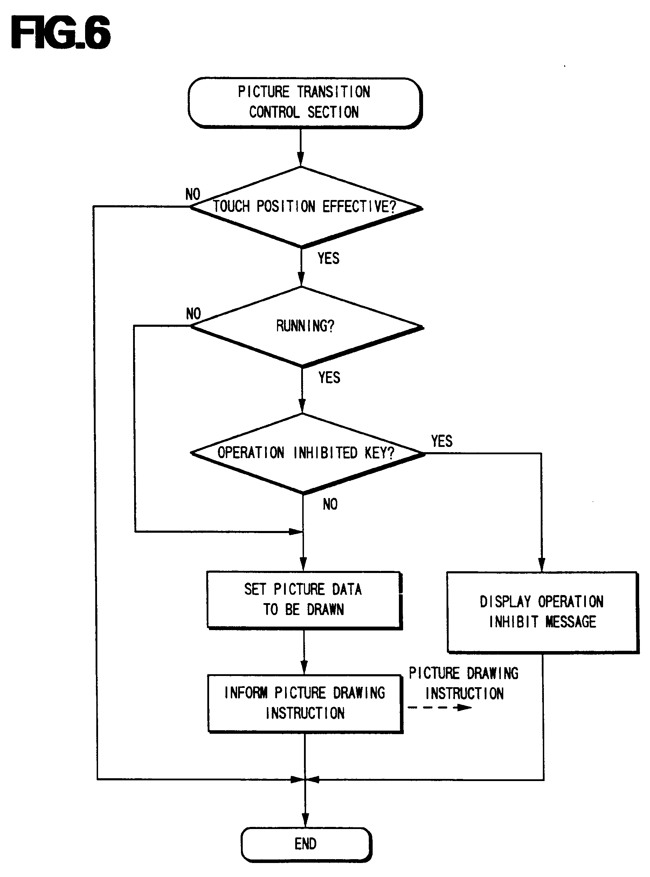

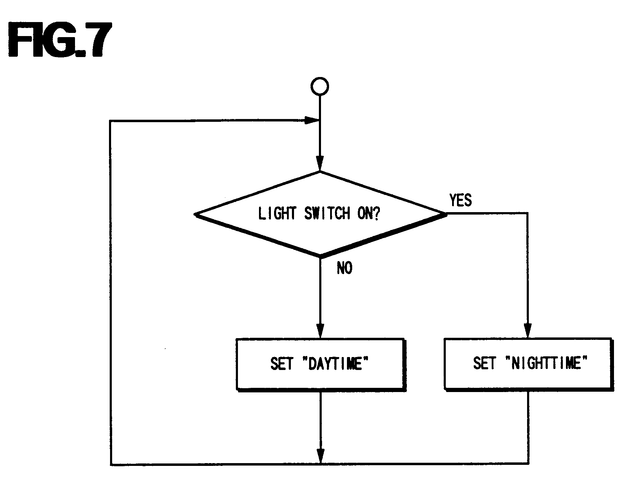

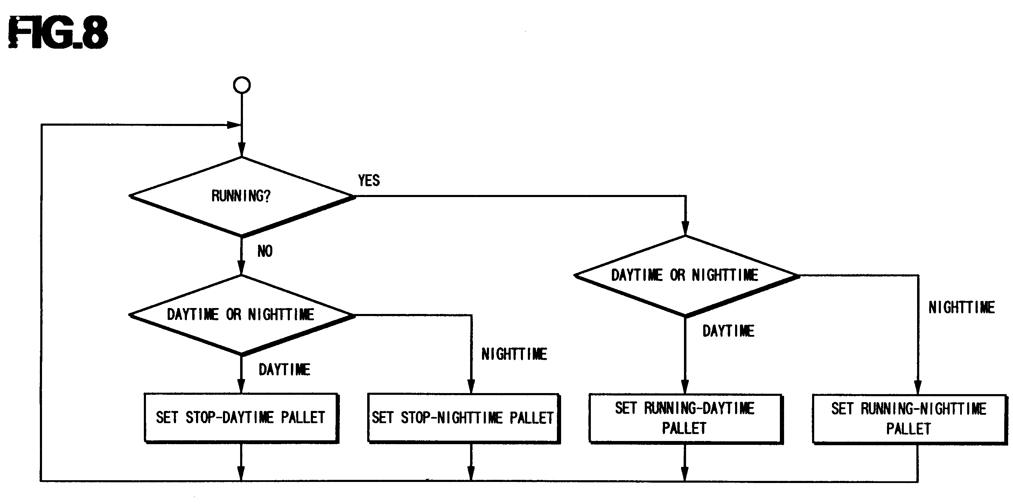

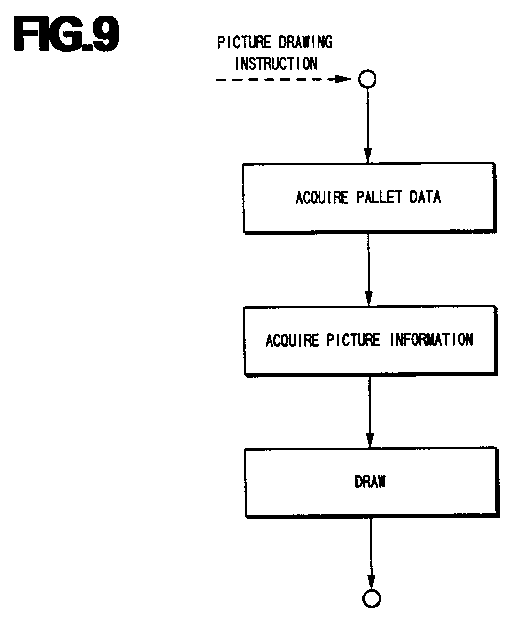

Here will be described the processings of the individual sections shown in Fig. 1. Fig. 3 is a flow chart for explaining the processing of a stop/run deciding section ; Fig. 4 is a flow chart for explaining the processing of a touch position detecting section ; Fig. 5 is a flow chart for explaining the processing of a picture transition control section ; Fig. 6 is a flow chart for explaining a picture transition processing subroutine ; Fig. 7 is a flow chart for explaining the processing of a daytime/nighttime deciding section ; Fig. 8 is a flow chart for explaining the processing of a pallet control section ; and Fig. 9 is a flow chart for explaining the processing of a picture drawing section.

The run/stop deciding section 2 examines whether or not there are the data of the vehicle speed sensor, as shown in Fig. 3, to set the "RUNNING" if the answer is YES and the "STOP" if NO. The touch position detecting section 4 scans each line, as shown in Fig. 4, to acquire the touch position data and inform the picture transition control section 6 of the touch data, if any. The picture transition control section 6 acquires not only the touch data from the touch position detecting section 4, as shown in Fig. 5, but also the run/stop data from the run/stop deciding section 2 to process the picture transition. The picture transition processing is to examine whether or not the touch position is effective, whether or not the vehicle is running, and whether or not the input key is inhibited, as shown in Fig. 6. If the touch position is effective and if the vehicle is running, and if the input key is inhibited, a "OPERATION INHIBIT" message is displayed. If the input key is not inhibited, the picture information to be drawn is set to instruct the picture drawing section 7 of the picture drawing operation thereby to draw a predetermined picture. If the touch position is effective but if the vehicle is not running, the predetermined picture is drawn.

The daytime/nighttime deciding section 3 examines at a predetermined time interval whether or not the light switch is ON, as shown in Fig. 7, to set "NIGHTTIME" if ON but otherwise "DAYTIME". On the other hand, the pallet control section 5 examines at a predetermined time interval whether or not the vehicle is running and whether it is in the daytime or in the nighttime. In accordance with this examination, the pallet control section 5 sets any of "STOP-DAYTIME PALLET", "STOP-NIGHTTIME PALLET", "RUNNING-DAYTIME PALLET" and "RUNNING-NIGHTTIME PALLET". The picture control section 7 acquires the pallet data and the picture information to draw the colors of the individual picture elements of the picture in the colors of the pallet data.

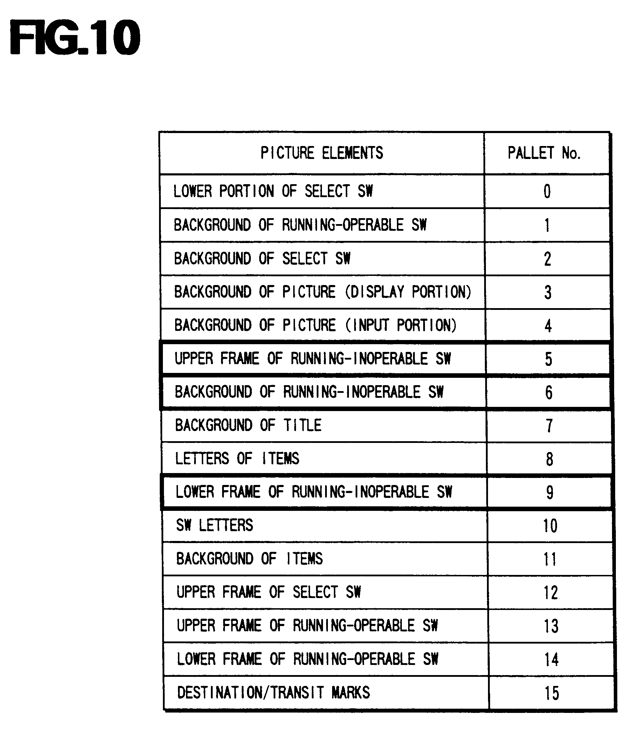

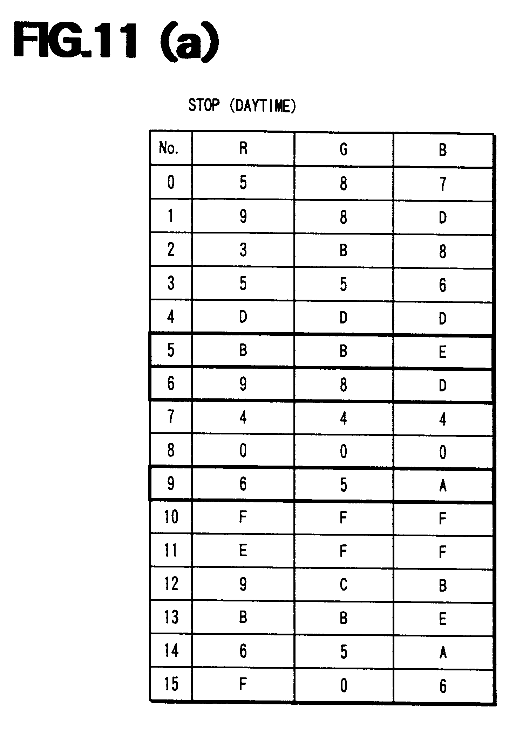

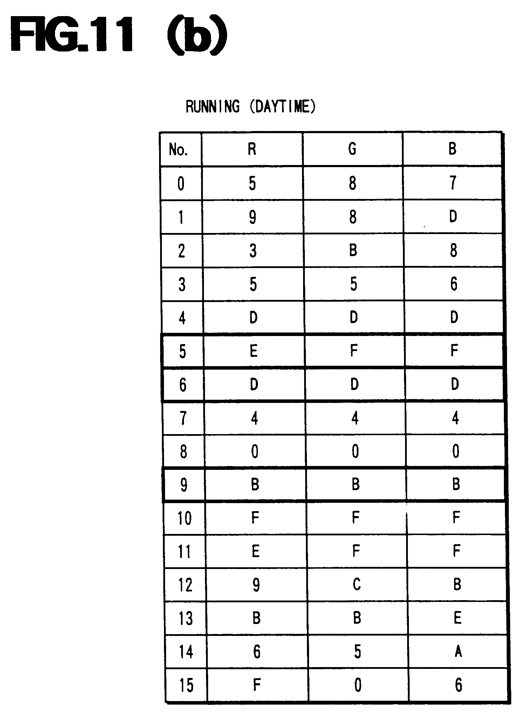

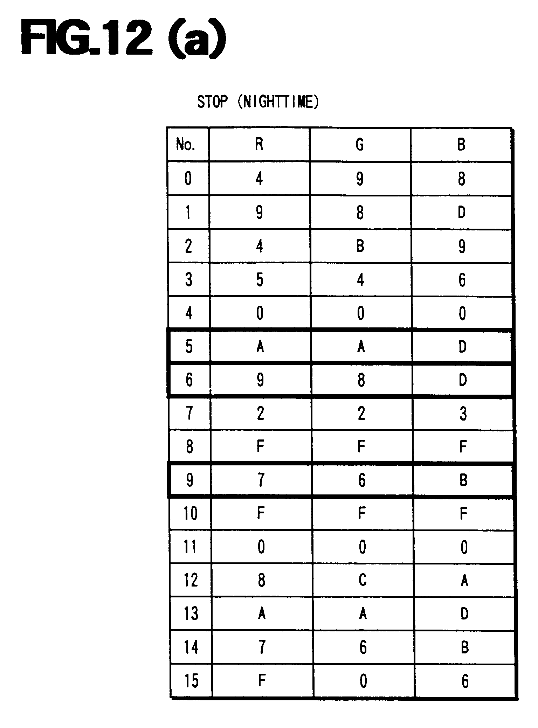

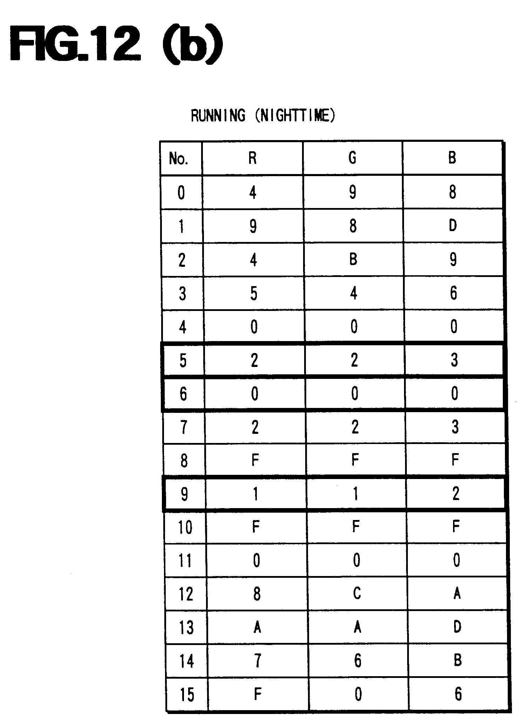

Fig. 10 is a table enumerating examples of correspondence between picture elements and pallets ; Fig. 11 presents tables enumerating examples of daytime pallet data ; and Fig. 12 presents tables enumerating examples of nighttime pallet data.

The drawn picture is composed of : the upper frame, the lower frame, the background and the letters for the select switch ; and the individual picture backgrounds of the display portion and the input portion, the individual display backgrounds of the title and the items, the letters of items and the destination/transit marks. In the present invention, the pallet numbers are respectively set for those elements, as shown in Fig. 10, and the pallets Nos. 1, 13, 14, 5, 6 and 9 are respectively set for the upper frames, lower frames and backgrounds of the running-operable select switches and the running-inoperable select switches. Moreover, the daytime pallet data, as shown in Fig. 11, and the nighttime pallet data, as shown in Fig. 12, are respectively provided for the stop and running states. Thus, the pallet data are changed not only for the daytime and nighttime so that they may be prevented from becoming ambiguous as a whole for the brightness of the daytime and the darkness of the nighttime but also for the stop and running states with the upper and lower frames and the background of the running-inoperable select switch. Specifically, not only in the daytime pallet data shown in Fig. 11 but also in the nighttime pallet data shown in Fig. 12 : the data other than those of the upper and lower frames and the background of the running-inoperable select switch are common between the stop and running states : the data of the upper and lower frames and the background of the running-inoperable select switch are identical during the stop state to those of the running-operable select switch ; but the data of the upper and lower frames and the background of the running-inoperable select switch are changed for the running state. Moreover, the data of the upper and lower frames and the background of the running-inoperable select switch are displayed, as apparent from the background, in chromatic colors having different values of R (red), G (green) and B (blue) during the stop state but in achromatic colors (gray, or white or black) having an equal value of R, G and B during the running state and with an identical background. If white data are (F, F, F), for example, the data are set to brighter data (D, D, D) at a daytime but to black data (0, 0, 0) at a nighttime.

Incidentally, the present invention should not be limited to the embodiment described above but can be modified in various manners. In the foregoing embodiment, for example, the pallets are interchanged between the daytime and nighttime, but common pallets can naturally be used for the daytime and nighttime. Moreover, the foregoing embodiment is exemplified by displaying the input keys in the picture so that they may be touched by combining the touch panels. Alternatively, arrow cursors are displayed in the picture so that they may be operated by the joy stick, mouse or wireless controller to select the input keys. The keys inhibited to input during the running are exemplified by the key for inputting the name of facilities as in case a plurality of key operations are required for setting a certain function. What is allowed during the running is the key which can be set by one or two actions. This inhibition may be likewise applied to the case in which a course guidance or information necessary for the user is presented in the picture. For example, only the information to be easily confirmed from the picture is allowed during the running, but the information taking a long time for the user to confirm is inhibited during the running. When the key color control is exemplified by changing the inoperable key to a color identical to that of the background, the key can be substantially made to disappear.

With reference to the drawings, here will be described a system in which the information display device of the present invention is applied to a navigation system.

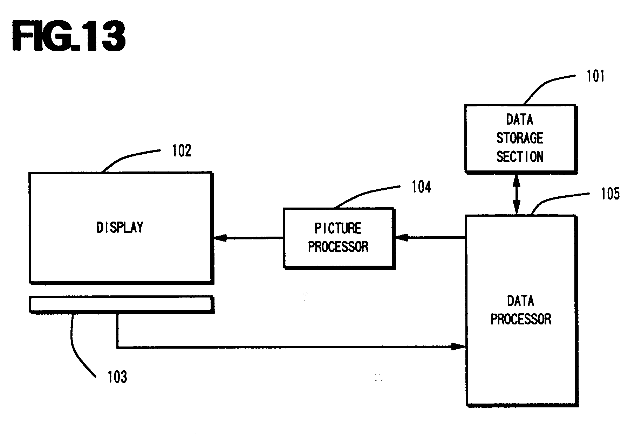

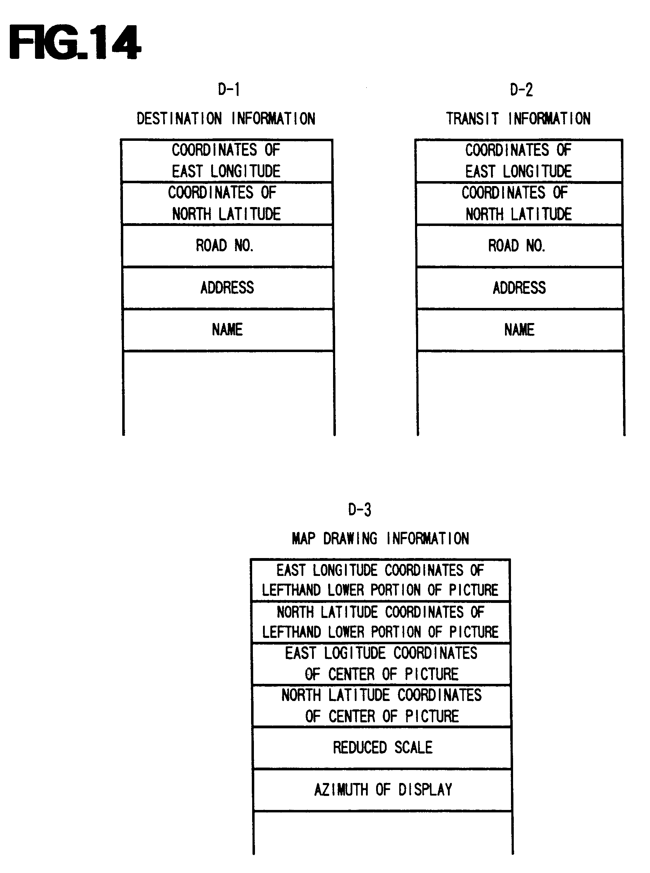

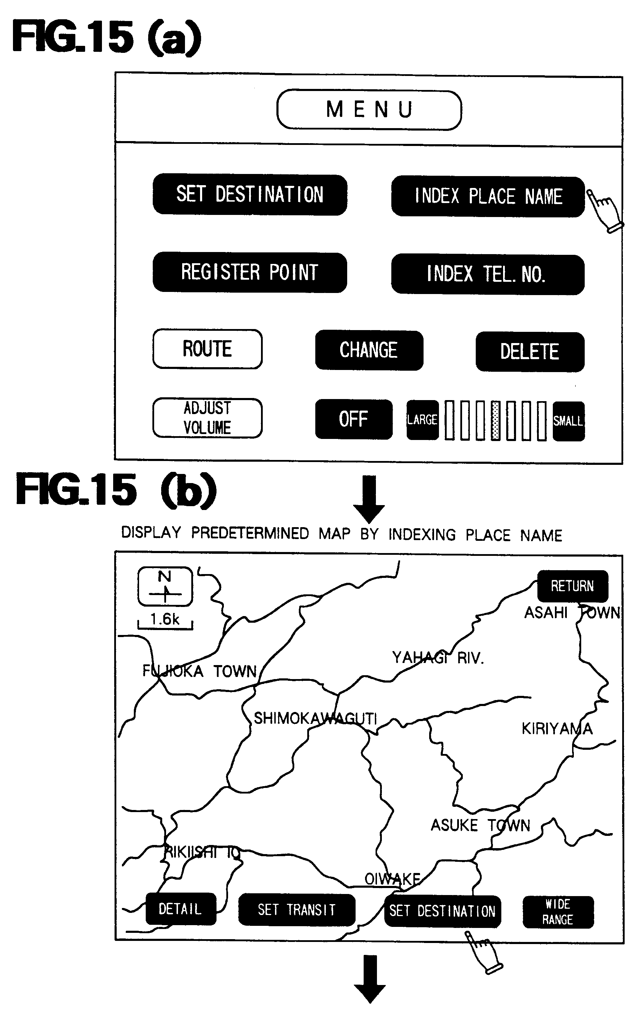

Fig. 13 is a block diagram for explaining one example of a navigation system to which is applied the information display device of the present invention ; Fig. 14 presents diagrams showing an example of construction of map display-point information of a data storage section ; and Fig. 15 presents diagrams showing examples of a menu picture and a map display picture.

In Fig. 13, a data storage section 101 is stored with map data and various data necessary for the map display-point information and the route search and guidance, and the map data has the map drawing information of a plurality of scales for inputting the point such as the starting point, the destination or the transit and for making guidances along the route. A display 102 is composed of a color CRT or a color liquid crystal display and is mounted in the instrument panel near the driver's seat. The display 102 further displays not only all the pictures in colors, that are necessary for the navigation such as the route setting picture, the section picture or the node picture based upon the map data or the guidance data to be processed by a data processor 105, but also the buttons for setting the route guidance, for guiding the route guidance , for switching the pictures and for the telephone communications. Of these, the information such as the name of the node to be passed is temporarily displayed popped up in colors in the section map picture. This enables the driver to confirm the present position of his own vehicle and to acquire the information of the route to be followed, merely observing the section map. This display 102 functions as the display device of the present invention.

A picture processor 104 stores the picture memory with the picture data to be used for the display 102, fetches the picture data from the picture memory on the basis of the display control signal coming from the data processor 105, and processes the picture to output a desired picture on the screen of the display 102. This picture processor 104 functions as the picture drawing section 7 of the present invention.

A switch 103 is exemplified by touch switches of the touch panel to be provided for the function buttons displayed in the display 102 or the button switches provided in the periphery of the display 102, so that the various operations are executed on the basis of signals inputted from those switches. The input signal generating means forming the input portion is composed of the touch switches of the touch panels and the button switches to constitute the touch position detecting section 4 of the present invention.

The data processor 105 processes the input information coming from the switch 103, e.g., changes the map display to a predetermined scale or scrolls the map to control the displayed content of the picture of the display 102 through the picture processor 104 by executing the program for searching the route or the program for the display control necessary for the route guidance or the voice output control necessary for the voice guidance. This data processor 105 constitutes the pallet control section 5 and the picture transition control section 6 of the present invention.

The map display-point information to be stored in the data storage section 101 includes : the destination information D-1 and the transit information D-2 composed of the coordinates of east longitude, the coordinates of north latitude, the road No., the address and the name ; and the map drawing information D-3 composed of the east longitude coordinates of lefthand lower portion of picture, the north latitude coordinates of lefthand lower portion of picture, the east longitude coordinates of center of picture, the north latitude coordinates of center of picture, the reduced scale and the azimuth of display.

The display 102 has its screen displayed with the menu picture, as shown in Fig. 15 (a), for inputting the point by setting the destination or registering the point, and the point such as the destination or transit is inputted through the picture. The menu picture is displayed with the touch keys of "SET DESTINATION", "INDEX PLACE NAME", "REGISTER POINT", "INDEX TEL. NO.", "CHANGE", "DELETE", "OFF", "LARGE" and "SMALL". The "SET DESTINATION" key is one for shifting to a destination setting mode, in which the picture is shifted to the search key pictures for the place name index, the home, the present place and its circumference, the memory point, the national map, the telephone number or the previous starting point, and the route search is executed when the destination is set. The "INDEX PLACE NAME" key is one for searching a prefecture name or a city name to open the map of the desired city or area or its circumference and is used as an atlas. The "REGISTER POINT" key is one to be used when the driver registers an arbitrary point as the point data from the map data. Generally speaking, the navigation system is recorded in advance with the destinations classified according to their genre, for example, as the information for setting the destination so that the destination may be set by searching the recording. The "REGISTER POINT" key makes an addition and is used in case the driver wants to register his private point such as his home, acquaintance, facilities or agencies. This point information is composed of the point number, the name, the coordinates and the telephone number and is registered on the basis of the coordinates set on the map. The "INDEX TEL. NO." key is one for displaying the map around the registered point of a telephone number inputted. In the absence of the corresponding telephone number, the "INDEX TEL. NO." key displays the map around a representative point of the toll and local numbers. The "CHANGE" and "DELETE" keys are one for changing and deleting the route searched and stored. The "OFF", "LARGE" and "SMALL" keys are ones for controlling and adjusting the volume of a voice output device separately provided but not shown.

In the navigation system according to the present embodiment, for example, a point index is selected from the menu screen shown in Fig. 15 (a). When the point is searched in terms of the prefecture name or the city name, the map of the vicinity of a desired point is displayed, as shown in Fig. 15 (b). When the destination setting or the transit setting is selected, the map is displayed by changing the reduced scale to a desired one. When the desired point on the map is indicated by the touch panel in the screen, the picture is scrolled to locate that point at the center of the screen. Then, the map is displayed at a predetermined scale by switching the point setting so that the point at the center of the picture is inputted.

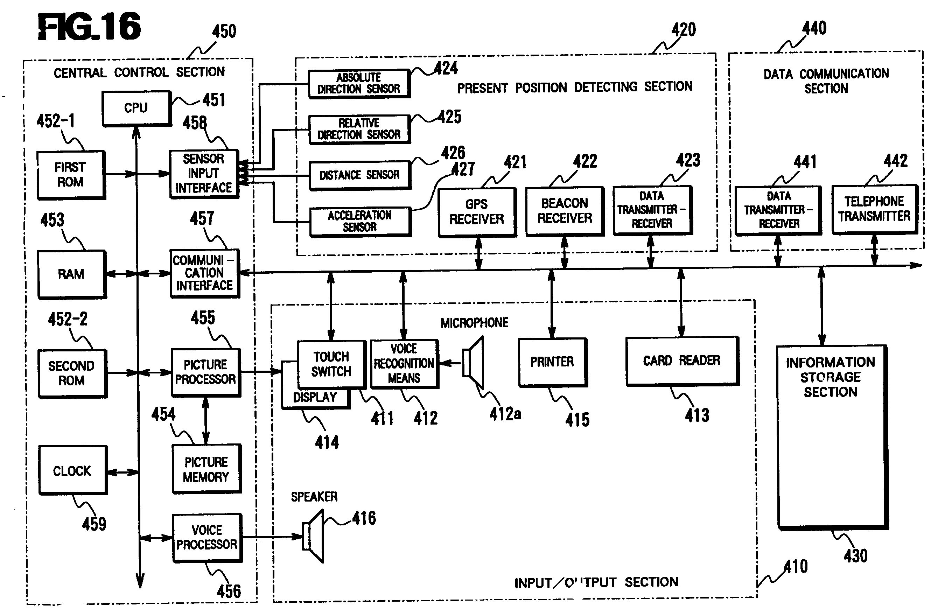

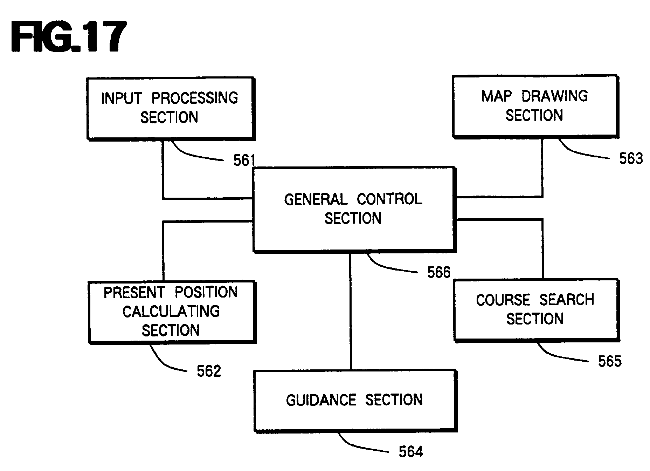

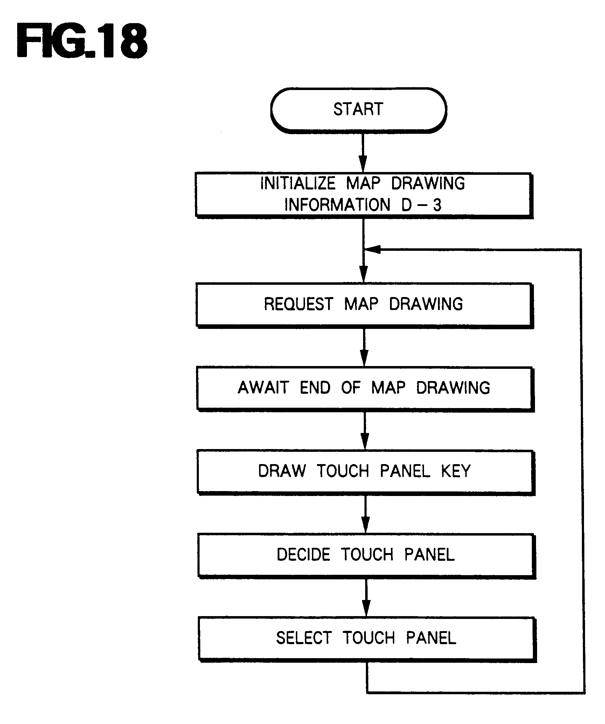

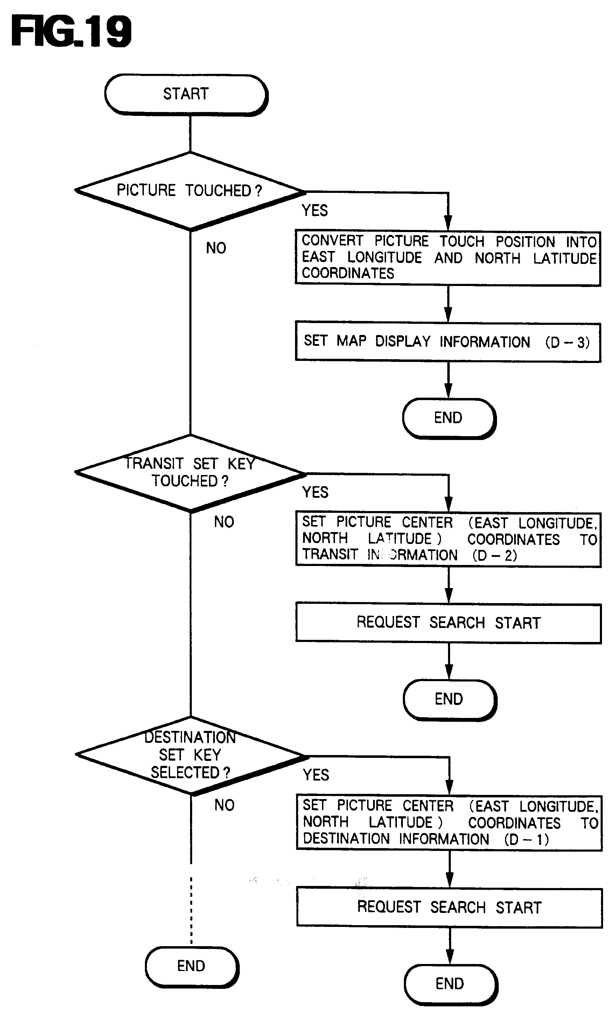

Here will be described in more detail the constructions of the individual devices of the navigation system according to the present embodiment, the flow of the processing, and the transition of the pictures. Fig. 16 is a block diagram showing an example of the construction of individual units of the navigation system ; Fig. 17 is a block diagram showing an example of the construction of a software of a central control section ; Fig. 18 is a flow chart for explaining the processing flow of an input processing section ; and Fig. 19 is a flow chart for explaining a touch panel selecting flow.

The navigation system according to the present embodiment is entirely constructed, as shown in Fig. 16, to include : an input/output section 410 for inputting and outputting the information on the route guidance ; a present position detecting section 420 for detecting the information on the present position of the vehicle ; an information storage section 430 stored with the navigation data necessary for calculating the route and the display guidance data necessary for the guidance ; a data communication section 440 for transmitting and receiving the navigation data to and from the data source such as the information center or the electronic note and for the telephone communications ; and a central control section 450 for executing the route search and the display guidance necessary for the route guidance and for controlling the system as a whole.

In Fig. 16, the input/output section 410 is given functions : to instruct the central control section 450 of the navigation processing in accordance with the will of the user so as to input the destination and to display the guidance information in the voice/picture when the driver requires ; and to output the processed data and the communication data to the printer. As the means for realizing those functions, the input unit includes : a touch switch 411 for inputting the destination in terms of the telephone number or coordinates and for requesting the route guidance ; a voice recognition means 412 ; and a card reader 413 for reading the data recorded in the IC card or the magnetic card. The output unit includes : a display 414 for displaying the input data in the screen and for displaying the route guidance automatically in the screen in response to the request of the driver ; a printer 415 for printing the data processed by the central control section 450, the data stored in the information storage section 430, and the communication data sent from the information center ; and a speaker 416 for outputting the route guidance in a voice.

The display 414 is constructed of the color CRT or the color liquid display for displaying in colors all the pictures necessary for the navigations such as the route setting picture, the section picture or the node picture based upon the map data or the guidance data processed by the central control section 450 and for displaying the buttons for setting the route guidance guiding the route being guided and switching the pictures. Especially the information of the node to be passed such as the name of node to be passed is temporarily popped up in colors in the section picture.

This display is mounted in the instrument panel in the vicinity of the driver's seat and enables the driver to confirm the present position of his vehicle by observing the section diagram and to acquire the information on the route to be followed. Moreover, the display 414 is displayed with the touch switch 411 corresponding to the display of the function buttons so that the aforementioned operations may be executed on the basis of the signals inputted by touching the buttons. The input signal generating means composed of those buttons and touch panel constitutes the input unit, although its detailed description is omitted here.

The voice recognition means 412 constitutes the input signal generating means for generating the signals to be processed by the central control section 450, after the coordinate information to be inputted in a voice through a microphone 412a by the user has been confirmed.

The present position detecting section 420 includes : a GPS receiver 421 making use of the global positioning system (GPS) ; a beacon receiver 422 ; a data transmitter-receiver 423 for receiving the correcting signal of the GPS by using the cellular phone or the FM multiple signals ; an absolute direction sensor 424 composed of a geomagnetic sensor, for example ; a relative direction sensor 425 composed of a wheel sensor or a steering sensor, for example ; a distance sensor 426 for detecting the travel distance from the number of revolutions of the wheels ; and an acceleration sensor 427.

The information storage section 430 is a data base recorded with : the map data, the intersection data, the node data, the road data, the photographic data, the destination data, the guidance point data, the detailed destination data, the road name data, the branching point data, the address data, the display guidance data and the voice guidance data, all of which are necessary for the route guidance ; and the destination information, the transit information and the map display information, as shown in Fig. 14.

The data communication section 440 includes : a data transmitter-receiver 441 for transmitting and receiving the data to and from the external information center served in response to the request of the user by storing the massive route guidance information and for transmitting and receiving the data to input the point coordinates by using the destination information which is stored in advance in the information storage media (i.e., the digital data storage means) such as the electronic note or the IC card by the user ; and a telephone transmitter 442 for automatically transmitting the telephone to acquire the peripheral information by designating a point and and the telephone to do the telephone communications with the destination after the destination has been set.

The central control section 450 includes : a CPU 451 for executing the arithmetic operations ; a first ROM 452-1 stored with the program for processing the route search, the program for controlling the display necessary for the route guidance and the voice output necessary for the voice guidance, and the data necessary for the programs ; a RAM 453 for temporarily storing the coordinates of a set point, the guidance information of a searched route, and the data being arithmetically operated; a second ROM 452-2 stored with the display information data necessary for the route guidance and the map display ; a picture memory 454 stored with the picture data to be used for the picture display ; a picture processor 455 for fetching the picture data from the picture memory on the basis of the display control signal coming from the CPU 451 to process the picture and output the processed picture to the display ; a voice processor 456 for synthesizing the voice, the phrase, one sentence and the sound read out from the information storage section 430 on the basis of the voice output control signal of the CPU to convert the synthesized information into an analog signal thereby to output the analog signal to the speaker ; a communication interface 457 for communicating the input/output data ; a sensor input interface 458 for fetching the sensor signal of the present position detecting section 420 ; and a clock 459 for posting the date and time to the internal dialog information. Here, the route guidance is constructed such that the driver can select either the picture display or the voice output.

The software of the central control section 450 is constructed, as shown in Fig. 17, of : an input processing section 561 for processing the information which is inputted from the touch switch 411, the voice recognizer 412 and the card reader 413 of the input/output section 410 ; a present position cal culating section 562 for calculating the present position of the vehicle on the basis of the signal inputted from the present position detecting section 420 ; a map drawing section 563 for drawing the map of the vicinity of the point searched at the predetermined reduced scale and azimuth ; a guidance section 564 for providing the map, the section diagram, the node diagram and the information on the remaining distance, name and leftward/rightward turns of a node at which the vehicle is to be turned, to teach the characteristics, to make a guidance by a voice, and to display the route on the map for the guidance ; a course search section 565 for searching the course on the basis of the inputs of the starting point or the present place, the destination, and the transit to set the route ; and a general control section 566 for controlling the aforementioned sections generally.

The processings by the input processing section 561 in case the map is to be drawn to input the point are executed, as shown in Fig. 18, by initially setting the reference coordinates, reduced scale and azimuth to be drawn on the picture and by issuing the map drawing request to the map drawing section 563 through the general control section. Then, the map drawing by the map drawing section 563 is awaited, and the touch panel key is drawn to decide the input of the touch panel. When an input is made upon the touch panel, the touch panel selection is executed. This touch panel is selected by deciding whether or not the picture is touched, whether or not the transit set key is touched, and whether or not the destination set key is selected, as shown in Fig. 19. In the case of the picture touch, moreover, the touch position on the picture is converted into the east longitude and north latitude coordinates to set the map display information D-3. In the case of the transit set key selected, moreover, the picture touch position is converted into the east longitude and north latitude coordinates to set the map display information D-3. In the transit set key selected, still moreover, the picture center (north latitude, east longitude) coordinates are set to the transit information D-2. In the case of the destination set key selected, furthermore, the picture center (north latitude, east longitude) coordinates are set to the destination information D-2 to issue the search start request.

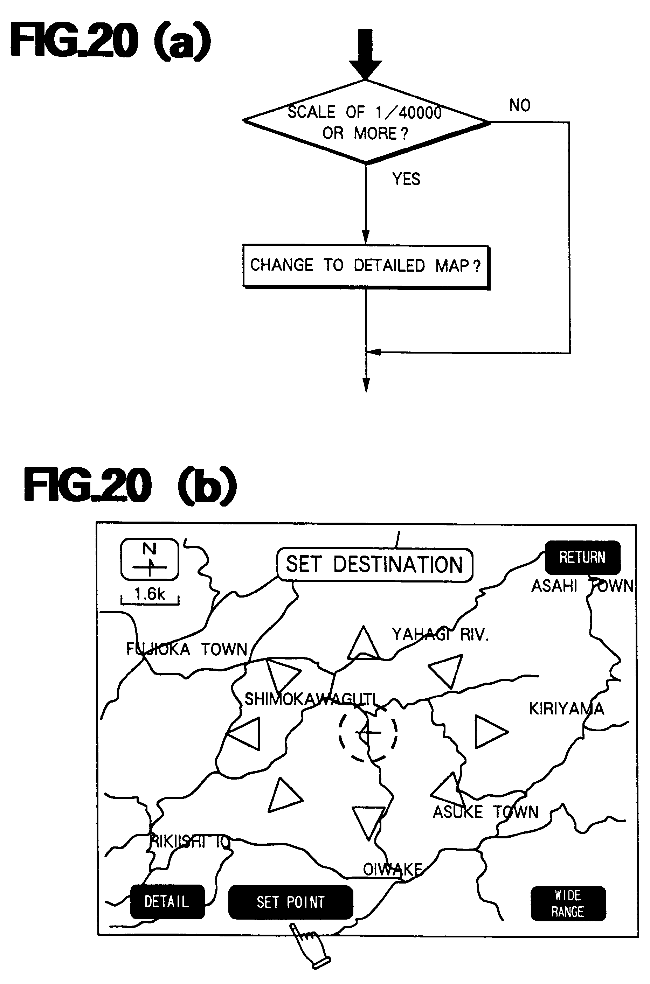

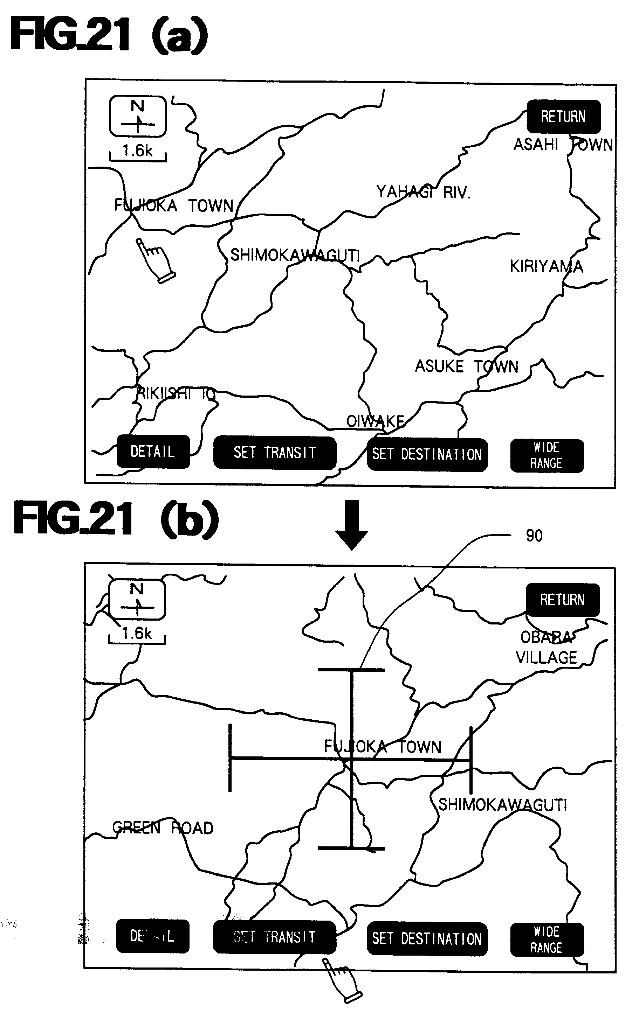

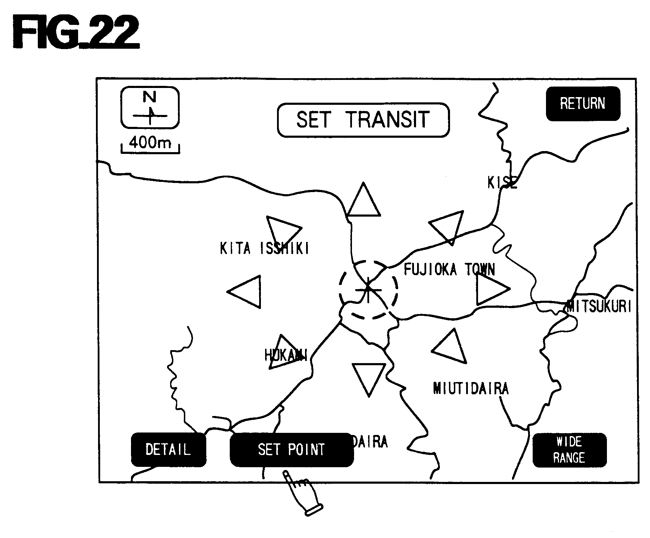

Here will be described the picture transition and the map change at the point setting time. Fig. 20 presents diagrams for explaining an example of a destination setting picture ; Fig. 21 presents diagrams for explaining an example of picture scrolling ; Fig. 22 is a diagram for explaining an example of transit setting ;

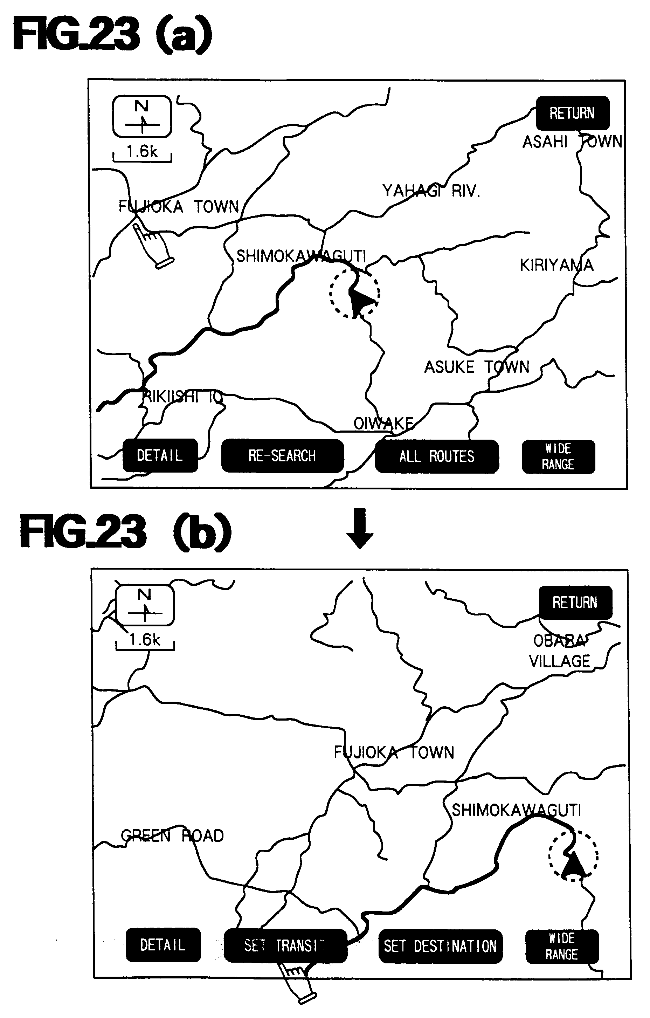

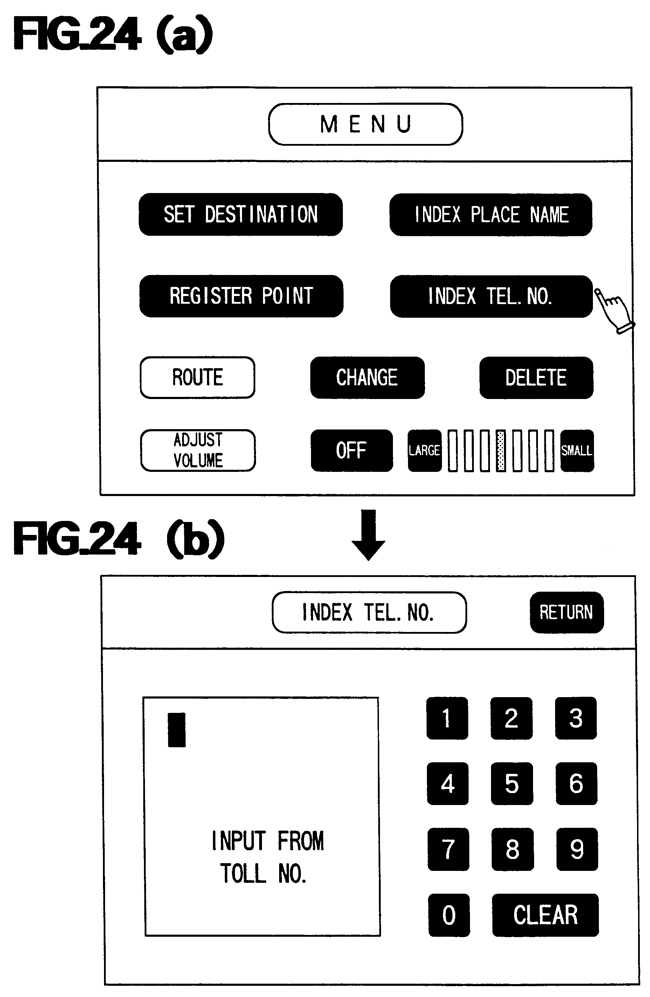

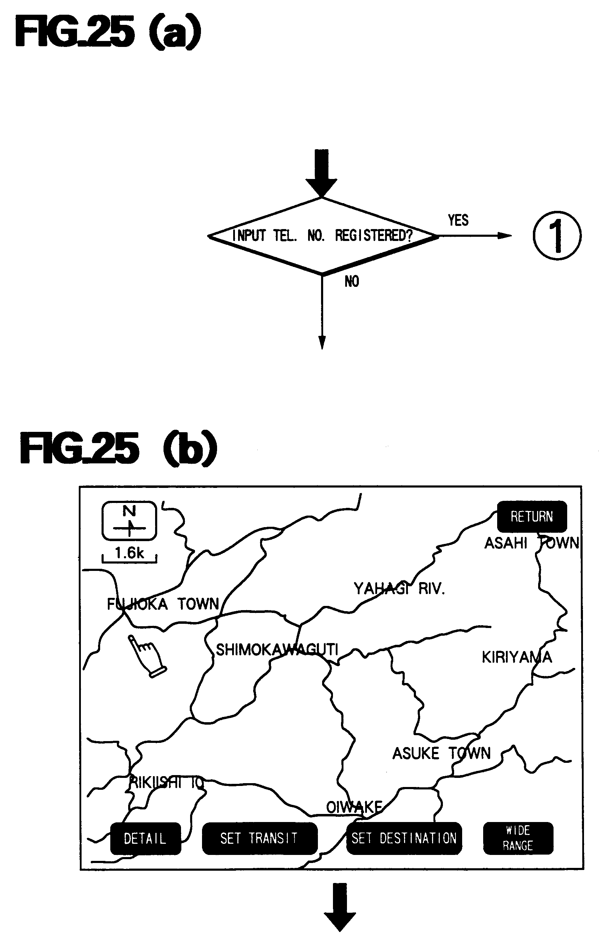

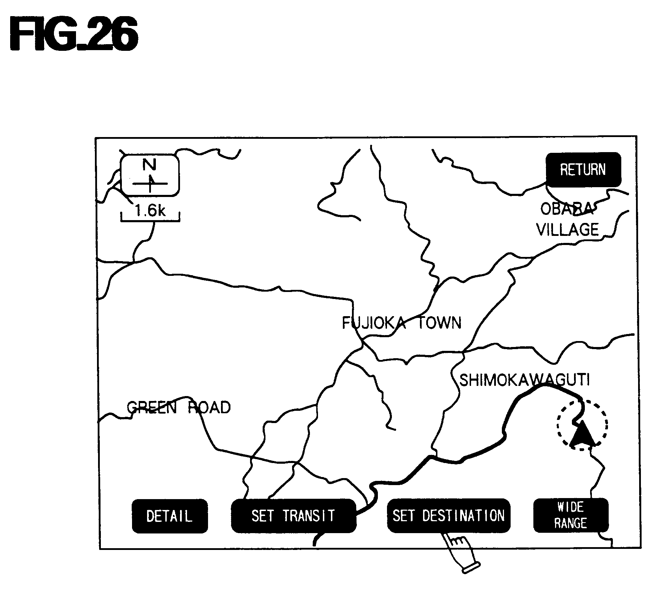

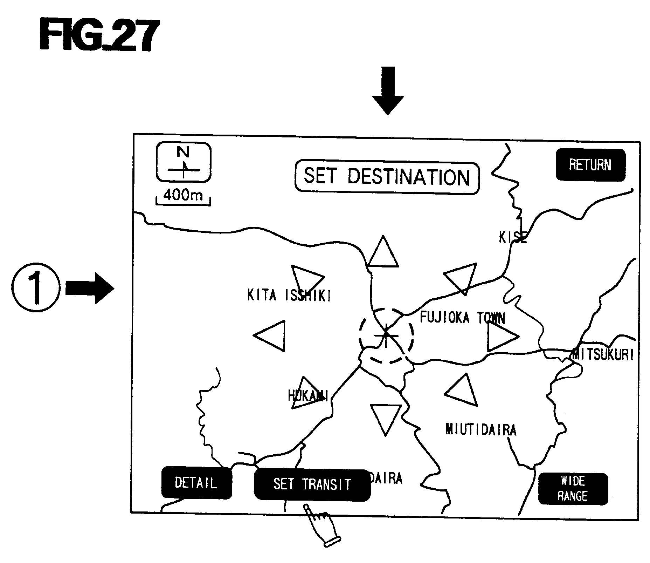

Fig. 23 presents diagrams for explaining an example of picture scrolling for setting a transit during a route guidance ; Fig. 24 presents diagrams showing an example of pictures for indexing a telephone number ; Fig. 25 presents diagrams for explaining an example of the case in which the telephone number is not registered ; Fig. 26 is a diagram for explaining a processing of the destination setting case ; and Fig. 27 is a diagram for explaining a point setting example for setting a destination.

When the destination setting or transit setting switch is touched in the picture displayed by indexing the map, as shown in Fig. 15 (b), it is decided, as shown in Fig. 20 (a), whether or not the scale of the map being displayed covers a wide area of 1/40000 or more. If the scale is of the wide area, the map is changed to the detailed one, and the eight-direction cursor is displayed for the fine adjustment, as shown in Fig. 20 (b). In case the positioning is required, the eight-direction cursor is operated to bring the cross mark to a predetermined position. Then, the destination or transit setting is ended by touching the point setting switch.

In case, on the other hand, an arbitrary position on the display map is to be moved to the center, it is touched, as shown in Fig. 21 (a). Then, the picture is scrolled to display the touched position in the center, as shown in Fig. 21 (b). When the transit setting switch is touched, whether or not the map covers the wide area is decided to display the detailed map, as has been described with reference to Fig. 20. Then, the transit setting is ended by touching the point setting switch, as shown in Fig. 22. Reference letter 90 appearing in Fig. 21 (b) designates a frame indicating such a range as is displayed in an enlarged scale when the point setting switch such as the transit setting switch or the destination setting switch is depressed.

In case, moreover, the transit is to be set during the route guidance, as shown in Fig. 23 (a), the picture is scrolled to the display position around the touched position, as shown in Fig. 23 (b), even if a desired point is touched. When the transit setting switch is touched, the transit can be set as in the case of Fig. 22.

In the case of indexing the telephone number, the "INDEX TEL. NO." is touched in the menu picture shown in Fig. 24 (a). Then, the picture for indexing the telephone number, as shown in Fig. 24 (b), is displayed, and the ten keys are touched to input the telephone number. In case the telephone number inputted is not registered, the periphery map corresponding to the toll/local number of the inputted telephone number is displayed, as shown in Fig. 25 (b). When the vicinity of Fujioka Town, if desired, is touched, the picture is scrolled to the map around Fujioka Town, as shown in Fig. 26. When the destination setting switch is then touched, the decision of Fig. 20 (a) is executed to display the eight-direction cursor and the cross mark for the fine adjustment, as shown in Fig. 27. Then, the position, which is pointed out by the cross mark when the point setting switch is touched, is set to the destination. In case the inputted telephone number is registered, the picture shown in Fig. 27 is instantly displayed.

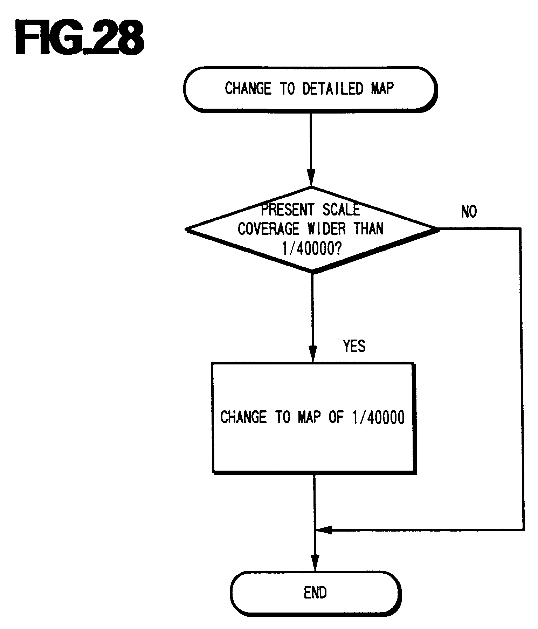

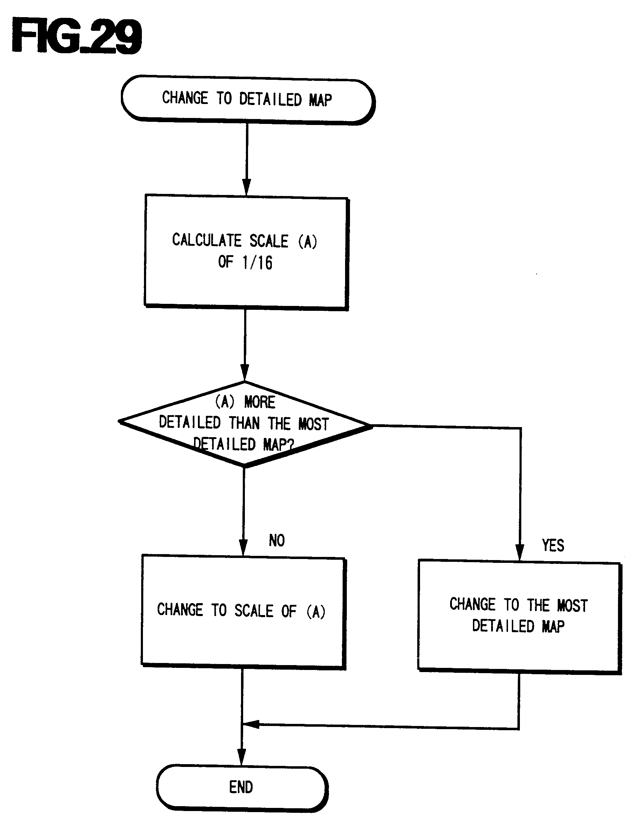

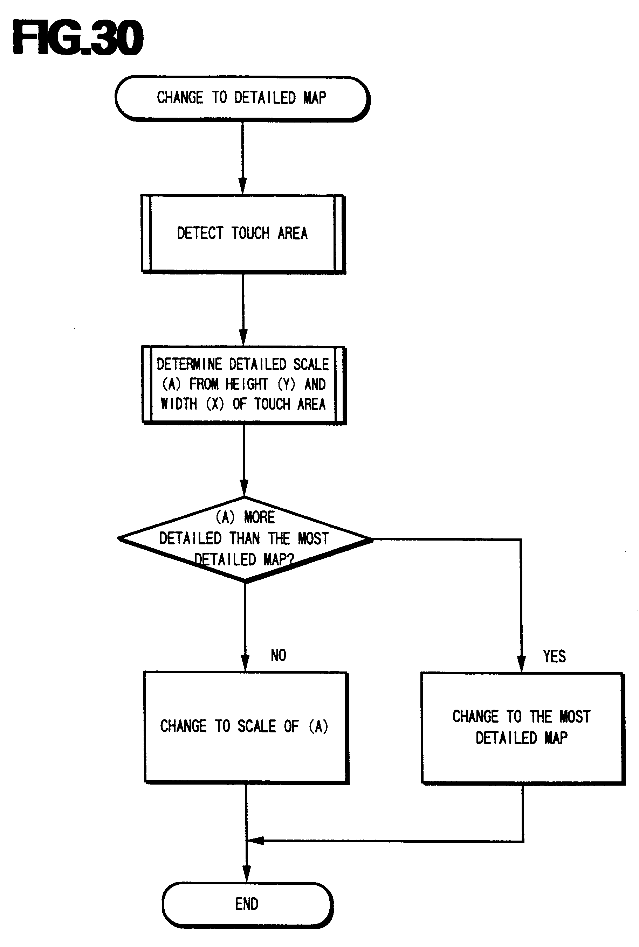

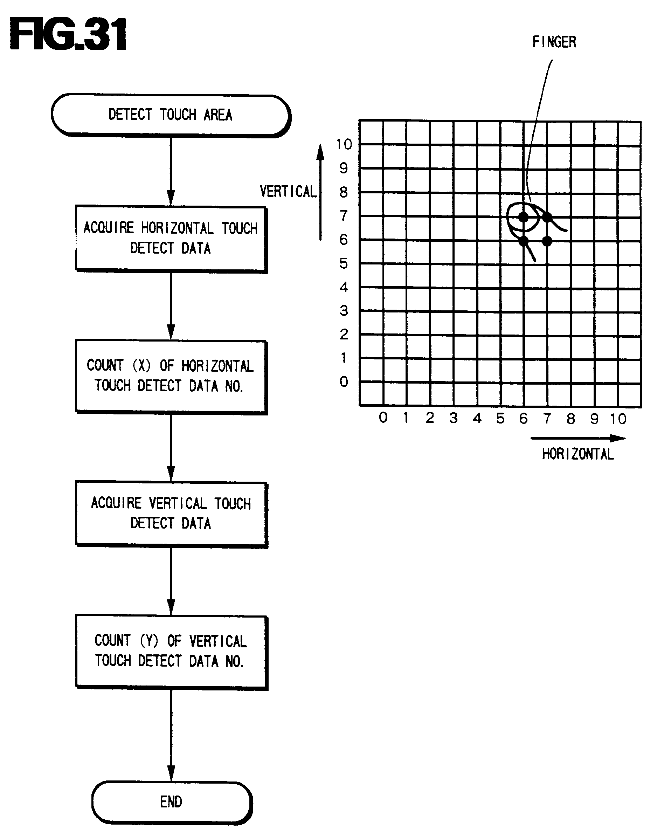

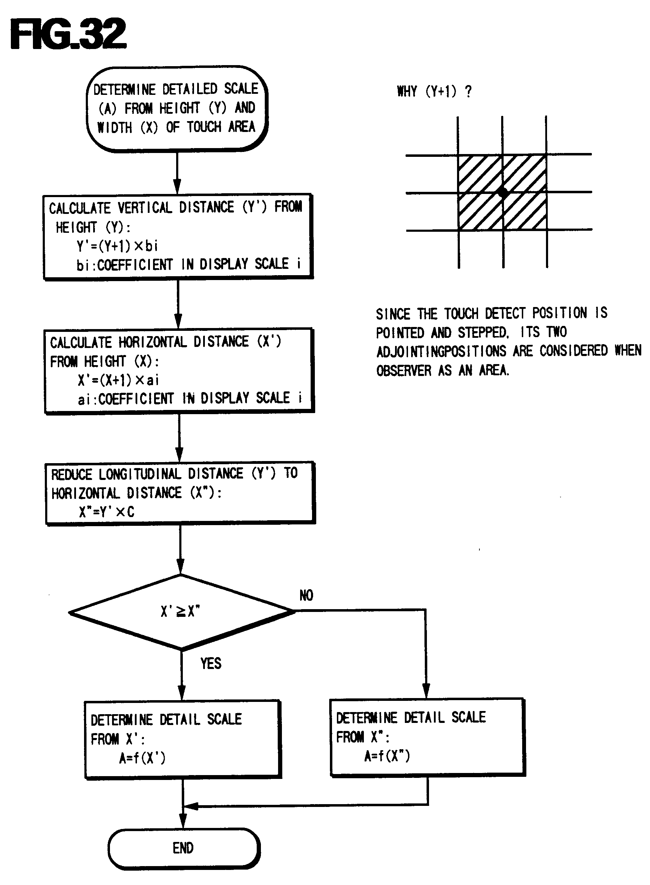

Here will be described the change to the detailed map. Fig. 28 is a flow chart for explaining a change to a map of a scale of 1/40000 ; Fig. 29 is a flow chart for explaining a change to a detailed map of a scale of 1/40000 ; Fig. 30 is a flow chart for explaining a change to a detailed map containing a touched area ; Fig. 31 is a diagram for explaining a touch area detecting processing ; and Fig. 32 is a diagram for ex plaining a detailed scale deciding processing.

Since, in the point setting case, the map capable of recognizing a point in an acceptable accuracy has a scale of 1/40000, the map having the scale of 1/40000 is adopted as the detailed one in the present embodiment. In the case of changing to the detailed map, therefore, it is decided, as shown in Fig. 28, whether or not the coverage of the present scale is wider than the map of 1/40000. If the answer is YES, the picture is changed to the map of 1/40000.

As the detailed scale containing the touched point, moreover, a detailed scale A of 1/16 is calculated, as shown in Fig. 29, and is examined whether or not it is more detailed than the most detailed map, so that the map is changed to the scale A within the range of the most detailed map. The change to the detailed map containing the touched area is executed by detecting the touch area, as shown in Fig. 30, to determine the detailed scale A from the height Y and the width X of the touch area. It is determined whether or not the scale A is more detailed than the most detailed one, as in the case of Fig. 28, and the map is changed to the scale A within the range of the most detailed one.

For detecting the touch area of this case, the horizontal and vertical touch detect data are acquired and individually counted, as shown in Fig. 31. For determining the detailed scale, moreover, the vertical distance $Y' = (Y + 1) \times bi$ from the height Y and the horizontal distance $X' = (X + 1) \times ai$ from the width X are calculated, as shown in Fig. 32. Incidentally, letters ai and bi indicate coefficients in the display scale i. Next, the vertical distance Y' is reduced to the horizontal distance $X' = Y' \times C$ , and the horizontal distance X' and the reduced distance X" are compared. If $X' \geq X''$, the detailed scale $A = f(X')$ is determined from X'. Otherwise, the detailed scale $A = F(X'')$ is determined from X". The reason why "+1" is included in the calculation of the distance is to consider the two adjacent adjoining positions when observed as the area, because the touch detect position is pointed and stepped.

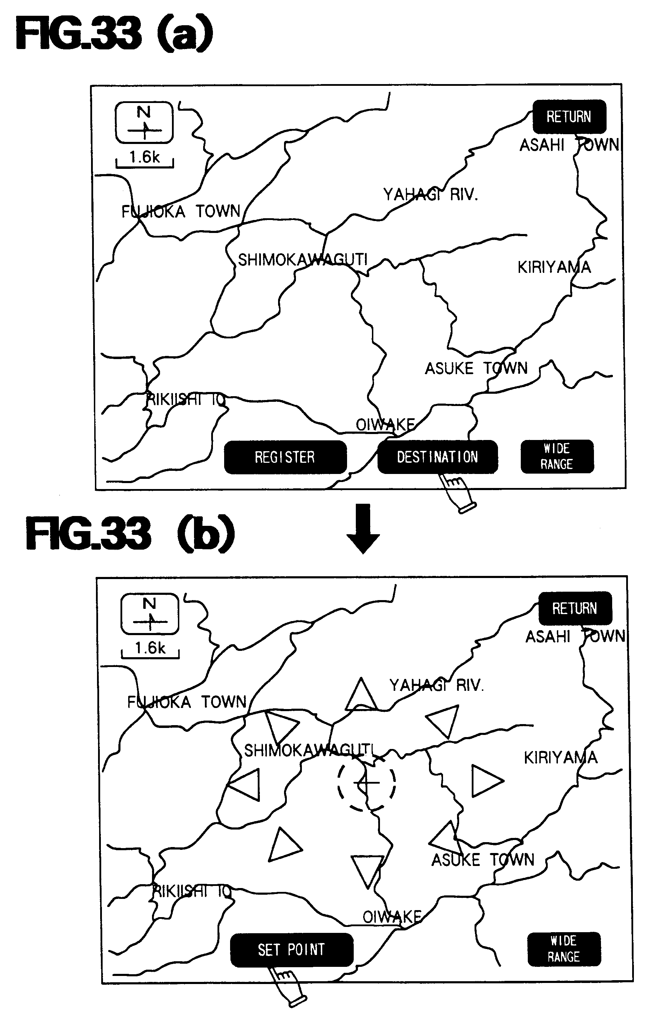

Fig. 33 presents diagrams showing the construction of the navigation system of the prior art. Here will be clearly described the effects of the present second embodiment in comparison with the prior art.

In the navigation system of the prior art shown in Fig. 33, the map covering the vicinity of a desired area can be read out and displayed by indexing the point in the menu picture to register the desired point and set the destination. In case the desired point is to be set as the destination, for example, the destination switch on the map picture of Fig. 33 (a), as displayed at first by indexing the place name, is touched (or operated). As a result of this operation, the map is changed to the destination setting picture, in which are displayed the first displayed map, the cross mark and the point set key for setting the point, and the eight-direction cursor for the fine adjustment. Since the cross mark is displayed at the center of the picture, the eight-direction cursor is used to scroll the picture selectively in the eight directions thereby to move the point such as the destination to be set to the center of the displayed picture, i.e., the position of the cross mark. By touching the point setting key, moreover, the point of the cross mark is set as the destination. In case, on the other hand, the desired point is to be set as the registered one, the register key is also touched to register the point of the cross mark.

According to the setting method of the prior art described above, however, a destination point may become too small to observe when a desired point is to be set as the destination, if the scale of the displayed map covers a wide area. This raises a problem that it is not easy to scroll the picture by using the eight-direction cursor thereby to register the point to be set accurately to the cross mark. Especially the vehicular navigation system has a problem that the display or the display unit to be mounted on the vehicle has a screen size as small as about six inches and is mounted in the center console of the vehicle so that it is hard to observe from the driver. In case, moreover, the map displayed at first in the display unit fails to contain the desired point, it may be unknown what direction the map is to be scrolled in so as to search the desired point. In this case, too, the picture has to be scrolled by using the eight-direction cursor to move the desired point to be set to the center of the displayed picture. As a result, the scrolling amount using the eight-direction cursor for the fine adjustment is increased to cause a problem that the setting takes a long time.

However, the foregoing embodiment can solve the above-specified problems and provide a navigation system which can input the point such as a destination or transit easily on a displayed map.

Specifically, the foregoing embodiment includes : the data storage section 101 having the map data containing the information for drawing maps of a plurality of reduced scales ; the display 102 constituting the display means for displaying the map in an arbitrary scale ; the input section 103 constituting the input means for indicating and inputting the key or point displayed in the display 102 constituting said display means ; and the data processor 105 for displaying the map in the display means by reading out the map data stored in the aforementioned data storage section 101 and for displaying the detailed map by changing to a predetermined reduced scale on condition that an instruction for setting the point is made by the aforementioned input section 103. The detailed map is displayed by scrolling or changing the reduced scale of the map which is displayed in the aforementioned display 102 by instructing and inputting the display picture by the aforementioned input section 103, so that the point can be promptly inputted by the simple operation to set the destination or transit easily even during the running.

Moreover, the data processor 105 constituting the display control means : scrolls the point on the map instructed by the aforementioned input section 103, around the center of the picture of the display 102 ; changes the reduced scale to a predetermined one and displays the map data, in case an instruction for setting the point is made by the aforementioned input section 103 ; scrolls the point on the map instructed by the aforementioned input section 103, around the center of the picture of the display means ; and display the range to be changed on the map in case the instruction for setting the point is made by the aforementioned input section 103. As a result, the scrolling of the map and the change to the detailed map can be easily accomplished to move the point to be inputted and the display of the detailed map thereby to improve the accuracy of the point inputting. Moreover, the scale is changed to one for displaying the designated area in the detailed map, and the map being displayed is changed to that of a predetermined magnification, so that an observable map can be displayed for inputting the point.

Incidentally, the present invention should not be limited to the foregoing embodiments but can be modified in various manners. In the foregoing embodiments, for example, when the map is changed to the detailed on, it is decided whether or not the map is wider than that having the scale of 1/40000. The reference for the decision may be exemplified by a more detailed map, and the scale of 1/16 may be modified into the scale of 1/8. Still moreover, the present embodiment has been described by exemplifying the input means by the touch panel, but a controller may be used to designate and input the key or point which is displayed on the display picture.

**Claims**

1.  A vehicular information display system comprising:

    a) display means (102) mounted on a vehicle;
    b) input means (4) for inputting a selection and instruction of a picture;
    c) picture transition control means (6) for controlling the transition of the picture in accordance with the instruction of said input means (4);
    d) state-of-driving deciding means (2) for deciding the state of driving of the vehicle and providing a decide signal corresponding to said state of driving;
    e) display color control means (5) for deciding and changing the colors of individual picture elements of said display means (102) in accordance with said decide signal from said state-of-driving deciding means (2); and
    f) picture drawing means (7) for displaying the picture, which is controlled by said picture transition control means (6), by means of said picture elements, wherein said picture drawing means (7) displays the picture elements of operable selection items as distinguished from the ones of inoperable selection items in accordance with said display color control means (5).

2.  A vehicular information display system according to claim 1, further comprising:

    velocity signal detection means for detecting the signal of the vehicle speed wherein said state-of-driving deciding means (2) decides the state of driving of a vehicle in accordance with said velocity signal.

3.  A vehicular information display system according to claim 1 or 2,

    wherein said state-of-driving deciding means (2) decides whether the vehicle is running or stopped.

4.  A vehicular information display system according to claim 3,

    wherein said display color means (5) changes the picture elements of the inoperable selection items, depending on whether the vehicle is running or stopped, in accordance with said decide signal.

5.  A vehicular information display system according to claim 3 or 4, further comprising:

    daytime/nighttime deciding means (3) for deciding the daytime and the nighttime and providing a daytime/nighttime decide signal, wherein said display color control means (5) changes the color of the individual picture elements in accordance with said daytime/nighttime decide signal.

6.  A vehicular information display system according to any of claims 3 to 5,

    wherein said display color control means (5) includes a plurality of pallets adapted to be changed in accordance with the decide signal of said state-of-driving deciding means (2) to decide the picture elements of the picture of said display means (102).

7. A system according to any of claims 3 to 6,

wherein said input means (4) includes a touch panel (411) combined with the picture of said display means (102).

8. A system according to any of claims 3 to 7,

wherein said picture transition control means (6) decides whether or not the instruction of said input means (4) is an inhibiting operation in case the vehicle is running and for displaying a running-inoperable message in case the operation is inhibited.

**Patentansprüche**

1. Fahrzeuginformationsanzeigesystem mit:

a) einer auf einem Fahrzeug angeordneten Displayeinrichtung (102);
b) einer Eingabeeinrichtung (4) zum Eingeben eines Auswahlpunkts und zum Anweisen eines Bildes;
c) einer Bildübergangssteuerungseinrichtung (6) zum Steuern des Übergangs eines Bildes gemäß der Anweisung der Eingabeeinrichtung (4);
d) einer Fahrtzustandbestimmungseinrichtung (2) zum Bestimmen des Fahrtzustands des Fahrzeugs und zum Bereitstellen eines dem Fahrtzustand entsprechenden Entscheidungssignals;
e) einer Displayfarbsteuerungseinrichtung (5) zum Bestimmen und Ändern der Farben einzelner Bildelemente der Displayeinrichtung (102) gemäß dem Entscheidungssignal von der Fahrtzustandbestimmungseinrichtung (2); und
f) einer Bildzeichnungseinrichtung (7) zum Darstellen des Bildes, das durch die Bildübergangssteuerungseinrichtung (6) gesteuert wird, durch die Bildelemente, wobei die Bildzeichnungseinrichtung (7) die Bildelemente betätigbarer Auswahlpunkte durch die Displayfarbsteuerungseinrichtung (5) anders darstellt, als diejenigen nicht-betätigbarer Auswahlpunkte.

2. Fahrzeuginformationsanzeigesystem nach Anspruch 1, ferner mit:

einer Geschwindigkeitssignalerfassungseinrichtung zum Erfassen eines Fahrzeuggeschwindigkeitssignals, wobei die Fahrtzustandbestimmungseinrichtung (2) den Fahrtzustand eines Fahrzeugs gemäß dem Geschwindigkeitssignal bestimmt.

3. Fahrzeuginformationsanzeigesystem nach Anspruch 1 oder 2,

wobei die Fahrtzustandbestimmungseinrichtung (2) bestimmt, ob das Fahrzeug fährt oder angehalten hat.

4. Fahrzeuginformationsanzeigesystem nach Anspruch 3,

wobei die Displayfarbsteuerungseinrichtung (5) die Bildelemente der nicht-betätigbaren Auswahlpunkte gemäß dem Entscheidungsignal in Abhängigkeit davon ändert, ob das Fahrzeug fährt oder angehalten hat.

5. Fahrzeuginformationsanzeigesystem nach Anspruch 3 oder 4, ferner mit:

einer Tages-/Nachtzeitbestimmungseinrichtung (3) zum Bestimmen der Tageszeit und der Nachtzeit und zum Bereitstellen eines Tages-/Nachtzeitentscheidungssignals, wobei die Displayfarbsteuerungseinrichtung (5) die Farbe der einzelnen Bildelemente gemäß dem Tages-/Nachtzeitentscheidungssignal ändert.

6. Fahrzeuginformationsanzeigesystem nach einem der Ansprüche 3 bis 5,

wobei die Displayfarbsteuerungseinrichtung (5) mehrere Paletten aufweist, die gemäß dem Entscheidungssignal der Fahrtzustandbestimmungseinrichtung (2) geändert werden können, um die Farben der Bildelemente des Bildes der Displayeinrichtung (102) festzulegen.

7. System nach einem der Ansprüche 3 bis 6,

wobei die Eingabeeinrichtung (4) ein mit dem Bild der Displayeinrichtung (102) kombiniertes Sensorfeld (411) aufweist.

8. System nach einem der Ansprüche 3 bis 7,

wobei die Bildübergangssteuerungseinrichtung (6) bestimmt, ob die Anweisung der Eingabeeinrichtung (4) eine gesperrte Operation ist, wenn das Fahrzeug fährt, und eine den im Fahrtzustand gesperrten Zustand anzeigende Meldung darstellt, wenn die Operation gesperrt ist.

**Revendications**

1. Système d'affichage d'informations pour véhicule comprenant :

   a) un moyen d'affichage (102) monté sur un véhicule;
   b) un moyen d'entrée (4) pour enter une sélection et une instruction d'une image;
   c) un moyen de commande (6) de transition d'image pour commander la transition de l'image selon l'instruction dudit moyen d'entrée (4);
   d) un moyen de détermination (2) d'état de conduite pour déterminer l'état de conduite du véhicule et pour fournir un correspondant audit état de conduite;
   e) un moyen de commande (5) de couleurs d'affichage pour déterminer et changer les couleurs d'éléments d'image individuels dudit moyen d'affichage (102) selon ledit signal de détermination provenant dudit moyen de détermination (2) d'état de conduite; et
   f) un moyen de tracé (7) d'image pour afficher l'image, qui est commandé par ledit moyen de commande (6) de transition d'image, à l'aide desdits éléments d'image, dans lequel ledit moyen de tracé (7) d'image affiche les éléments d'image de rubriques de sélection utilisables reconnaissables par rapport à ceux de rubriques de sélection non utilisables selon ledit moyen de commande (5) de couleurs d'affichage.

2. Système d'affichage d'informations pour véhicule selon la revendication 1, comprenant en outre un moyen de détection de signal de vitesse pour détecter le signal de la vitesse du véhicule dans lequel ledit moyen de détermination (2) d'état de conduite détermine l'état de conduite du véhicule selon ledit signal de vitesse.

3. Système d'affichage d'informations pour véhicule selon la revendication 1 ou 2, dans lequel ledit moyen de détermination (2) d'état de conduite détermine si le véhicule roule ou est arrêté.

4. Système d'affichage d'informations pour véhicule selon la revendication 3, dans lequel ledit moyen de commande (5) de couleurs d'affichage change les éléments d'image des rubriques de sélection non utilisables, selon que le véhicule roule ou est arrêté, en fonction dudit signal de détermination.

5. Système d'affichage d'informations pour véhicule selon la revendication 3 ou 4, comprenant en outre :

   un moyen de détermination jour/nuit (3) pour déterminer s'il fait jour ou s'il fait nuit et pour fournir un signal de détermination jour/nuit, dans lequel ledit moyen de commande (5) de couleurs d'affichage change la couleur des éléments d'image individuels en fonction dudit signal de détermination jour/nuit.

6. Système d'affichage d'informations pour véhicule selon l'une quelconque des revendications 3 à 5, dans lequel ledit moyen de commande (5) de couleurs d'affichage comporte une pluralité de palettes adaptées pour être modifiées en fonction du signal de détermination dudit moyen de détermination (2) d'état de conduite pour déterminer les éléments d'image de l'image dudit moyen d'affichage (102).

7. Système selon l'une quelconque des revendications 3 à 6, dans lequel ledit moyen d'entrée (4) comporte un panneau tactile (411) combiné avec l'image dudit moyen d'affichage (102).

8. Système selon l'une quelconque des revendications 3 à 7, dans lequel ledit moyen de commande (6) de transition d'image détermine si l'instruction dudit moyen d'entrée (4) est ou non une opération d'invalidation au cas où le véhicule est en train de rouler et pour afficher un message d'invalidation de roulage dans le cas où l'opération est invalidée.

# FIG.1

DAYTIME/NIGHTTIME
DECIDING SECTION  — 3

VEHICLE SPEED SENSOR
READING SECTION  — 1

RUN/STOP DECIDING
SECTION  — 2

PALLET CONTROL
SECTION  — 5

TOUCH POSITION
DETECTING SECTION  — 4

PICTURE TRANSITION
CONTROL SECTION  — 6

PICTURE DRAWING
SECTION  — 7

EP 0 660 083 B1

# FIG.2 (a)

SET DESTINATION

| TEL. NO. | NAME OF FACILITIES | ADDRESS |
| HOME | MEMORY POINT | PREVIOUS STARTING POINT |

STOP ⬇ ⬆ RUN

# FIG.2 (b)

SET DESTINATION

| TEL. NO. | NAME OF FACILITIES | ADDRESS |
| HOME | MEMORY POINT | PREVIOUS STARTING POINT |

DIFFERENT KEY COLOR

14

## FIG.2 (c)

SET DESTINATION

TEL. NO.　　NAME OF FACILITIES　　ADDRESS

HOME　　MEMORY POINT　　PREVIOUS

NO OPERATION ALLOWED
BEFORE STOP

① TEL. NO.

## FIG.2 (d)

N
400m
SET DESTINATION　　RETURN

+

DETAIL　　SET POINT　　WIDE RANGE

② HOME

# FIG.3

SET "RUNNING"

SET "STOP"

VEHICLE SPEED SENSOR DATA?

NO

YES

# FIG.4

ACQUIRE TOUCH POSITION DATA

TOUCH DATA?

NO

YES

INFORM TOUCH DATA

(TOUCH DATA)

# FIG.5

(TOUCH DATA)

```
ACQUIRE TOUCH DATA
```

```
ACQUIRE RUN/STOP DATA
```

```
PICTURE TRANSITION PROCESSING
```

# FIG.6

PICTURE TRANSITION
CONTROL SECTION

TOUCH POSITION EFFECTIVE?  NO  YES

RUNNING?  NO  YES

OPERATION INHIBITED KEY?  YES  NO

SET PICTURE DATA
TO BE DRAWN

DISPLAY OPERATION
INHIBIT MESSAGE

INFORM PICTURE DRAWING
INSTRUCTION

PICTURE DRAWING
INSTRUCTION

END

# FIG.7

# FIG.8

RUNNING?

YES

NO

DAYTIME OR NIGHTTIME

DAYTIME OR NIGHTTIME

DAYTIME

NIGHTTIME

DAYTIME

NIGHTTIME

SET STOP-DAYTIME PALLET

SET STOP-NIGHTTIME PALLET

SET RUNNING-DAYTIME PALLET

SET RUNNING-NIGHTTIME PALLET

EP 0 660 083 B1

# FIG.9

PICTURE DRAWING
INSTRUCTION

```
┌─────────────────────────────┐
│      ACQUIRE PALLET DATA      │
└─────────────────────────────┘

┌─────────────────────────────┐
│  ACQUIRE PICTURE INFORMATION  │
└─────────────────────────────┘

┌─────────────────────────────┐
│            DRAW              │
└─────────────────────────────┘
```

# FIG.10

| PICTURE ELEMENTS | PALLET No. |
|---|---|
| LOWER PORTION OF SELECT SW | 0 |
| BACKGROUND OF RUNNING-OPERABLE SW | 1 |
| BACKGROUND OF SELECT SW | 2 |
| BACKGROUND OF PICTURE (DISPLAY PORTION) | 3 |
| BACKGROUND OF PICTURE (INPUT PORTION) | 4 |
| UPPER FRAME OF RUNNING-INOPERABLE SW | 5 |
| BACKGROUND OF RUNNING-INOPERABLE SW | 6 |
| BACKGROUND OF TITLE | 7 |
| LETTERS OF ITEMS | 8 |
| LOWER FRAME OF RUNNING-INOPERABLE SW | 9 |
| SW LETTERS | 10 |
| BACKGROUND OF ITEMS | 11 |
| UPPER FRAME OF SELECT SW | 12 |
| UPPER FRAME OF RUNNING-OPERABLE SW | 13 |
| LOWER FRAME OF RUNNING-OPERABLE SW | 14 |
| DESTINATION/TRANSIT MARKS | 15 |

# FIG.11 (a)

STOP (DAYTIME)

| No. | R | G | B |
|-----|---|---|---|
| 0 | 5 | 8 | 7 |
| 1 | 9 | 8 | D |
| 2 | 3 | B | 8 |
| 3 | 5 | 5 | 6 |
| 4 | D | D | D |
| 5 | B | B | E |
| 6 | 9 | 8 | D |
| 7 | 4 | 4 | 4 |
| 8 | 0 | 0 | 0 |
| 9 | 6 | 5 | A |
| 10 | F | F | F |
| 11 | E | F | F |
| 12 | 9 | C | B |
| 13 | B | B | E |
| 14 | 6 | 5 | A |
| 15 | F | 0 | 6 |

# FIG.11 (b)

RUNNING (DAYTIME)

| No. | R | G | B |
|---|---|---|---|
| 0 | 5 | 8 | 7 |
| 1 | 9 | 8 | D |
| 2 | 3 | B | 8 |
| 3 | 5 | 5 | 6 |
| 4 | D | D | D |
| 5 | E | F | F |
| 6 | D | D | D |
| 7 | 4 | 4 | 4 |
| 8 | 0 | 0 | 0 |
| 9 | B | B | B |
| 10 | F | F | F |
| 11 | E | F | F |
| 12 | 9 | C | B |
| 13 | B | B | E |
| 14 | 6 | 5 | A |
| 15 | F | 0 | 6 |

# FIG.12 (a)

STOP (NIGHTTIME)

| No. | R | G | B |
|---|---|---|---|
| 0 | 4 | 9 | 8 |
| 1 | 9 | 8 | D |
| 2 | 4 | B | 9 |
| 3 | 5 | 4 | 6 |
| 4 | 0 | 0 | 0 |
| 5 | A | A | D |
| 6 | 9 | 8 | D |
| 7 | 2 | 2 | 3 |
| 8 | F | F | F |
| 9 | 7 | 6 | B |
| 10 | F | F | F |
| 11 | 0 | 0 | 0 |
| 12 | 8 | C | A |
| 13 | A | A | D |
| 14 | 7 | 6 | B |
| 15 | F | 0 | 6 |

# FIG.12 (b)

RUNNING (NIGHTTIME)

| No. | R | G | B |
|-----|---|---|---|
| 0 | 4 | 9 | 8 |
| 1 | 9 | 8 | D |
| 2 | 4 | B | 9 |
| 3 | 5 | 4 | 6 |
| 4 | 0 | 0 | 0 |
| 5 | 2 | 2 | 3 |
| 6 | 0 | 0 | 0 |
| 7 | 2 | 2 | 3 |
| 8 | F | F | F |
| 9 | 1 | 1 | 2 |
| 10 | F | F | F |
| 11 | 0 | 0 | 0 |
| 12 | 8 | C | A |
| 13 | A | A | D |
| 14 | 7 | 6 | B |
| 15 | F | 0 | 6 |

# FIG.13

DATA
STORAGE
SECTION — 101

102

DISPLAY

104

PICTURE
PROCESSOR

105

DATA
PROCESSOR

103

# FIG.14

D-1

DESTINATION INFORMATION

| COORDINATES OF EAST LONGITUDE |
| --- |
| COORDINATES OF NORTH LATITUDE |
| ROAD NO. |
| ADDRESS |
| NAME |
| |

D-2

TRANSIT INFORMATION

| COORDINATES OF EAST LONGITUDE |
| --- |
| COORDINATES OF NORTH LATITUDE |
| ROAD NO. |
| ADDRESS |
| NAME |
| |

D-3

MAP DRAWING INFORMATION

| EAST LONGITUDE COORDINATES OF LEFTHAND LOWER PORTION OF PICTURE |
| --- |
| NORTH LATITUDE COORDINATES OF LEFTHAND LOWER PORTION OF PICTURE |
| EAST LOGITUDE COORDINATES OF CENTER OF PICTURE |
| NORTH LATITUDE COORDINATES OF CENTER OF PICTURE |
| REDUCED SCALE |
| AZIMUTH OF DISPLAY |
| |

# FIG.15 (a)

# FIG.15 (b)

DISPLAY PREDETERMINED MAP BY INDEXING PLACE NAME

# FIG.16

**450 CENTRAL CONTROL SECTION**

- CPU **451**
- **452-1** FIRST ROM
- **458** SENSOR INPUT INTERFACE
- **453** RAM
- **457** COMMUNI-CATION INTERFACE
- **452-2** SECOND ROM
- **455** PICTURE PROCESSOR
- **454** PICTURE MEMORY
- CLOCK **459**
- **456** VOICE PROCESSOR
- SPEAKER **416**

**420 PRESENT POSITION DETECTING SECTION**

- **424** ABSOLUTE DIRECTION SENSOR
- **425** RELATIVE DIRECTION SENSOR
- **426** DISTANCE SENSOR
- **427** ACCELERATION SENSOR
- **421** GPS RECEIVER
- **422** BEACON RECEIVER
- **423** DATA TRANSMITTER-RECEIVER

**440 DATA COMMUNICATION SECTION**

- **441** DATA TRANSMITTER-RECEIVER
- **442** TELEPHONE TRANSMITTER

**410 INPUT/OUTPUT SECTION**

- MICROPHONE
- TOUCH SWITCH / DISPLAY **414**
- VOICE RECOGNITION MEANS **411 412**
- **412a**
- PRINTER **415**
- CARD READER **413**

**430 INFORMATION STORAGE SECTION**

EP 0 660 083 B1

# FIG.17

```
┌─────────────────┐                    ┌─────────────────┐
│ INPUT PROCESSING │                    │   MAP DRAWING   │
│     SECTION      │                    │     SECTION     │
└─────────────────┘                    └─────────────────┘
              ╰── 561                              ╰── 563

         ┌──────────────────────┐
         │   GENERAL CONTROL    │
         │      SECTION         │
         └──────────────────────┘
                        ╰── 566

┌─────────────────┐                    ┌─────────────────┐
│ PRESENT POSITION │                    │  COURSE SEARCH  │
│   CALCULATING    │                    │     SECTION     │
│     SECTION      │                    └─────────────────┘
└─────────────────┘                              ╰── 565
         ╰── 562
                 ┌─────────────────┐
                 │ GUIDANCE SECTION │
                 └─────────────────┘
                          ╰── 564
```

# FIG.18

```
                    ┌─────────────────┐
                    │      START      │
                    └─────────────────┘
                             │
                             ▼
            ┌──────────────────────────────────┐
            │    INITIALIZE  MAP  DRAWING       │
            │    INFORMATION  D − 3             │
            └──────────────────────────────────┘
                             │
                             ▼ ◄──────────────────┐
            ┌──────────────────────────────────┐ │
            │    REQUEST  MAP  DRAWING          │ │
            └──────────────────────────────────┘ │
                             │                    │
                             ▼                    │
            ┌──────────────────────────────────┐ │
            │    AWAIT  END  OF  MAP  DRAWING   │ │
            └──────────────────────────────────┘ │
                             │                    │
                             ▼                    │
            ┌──────────────────────────────────┐ │
            │    DRAW  TOUCH  PANEL  KEY        │ │
            └──────────────────────────────────┘ │
                             │                    │
                             ▼                    │
            ┌──────────────────────────────────┐ │
            │    DECIDE  TOUCH  PANEL           │ │
            └──────────────────────────────────┘ │
                             │                    │
                             ▼                    │
            ┌──────────────────────────────────┐ │
            │    SELECT  TOUCH  PANEL           │ │
            └──────────────────────────────────┘ │
                             │                    │
                             └────────────────────┘
```

# FIG.19

```
                    ┌─────────────┐
                    │    START    │
                    └──────┬──────┘
                           │
                     ╱─────┴─────╲
                    ╱  PICTURE    ╲      YES    ┌──────────────────────────────┐
                   ╱  TOUCHED ?    ╲───────────▶│CONVERT PICTURE TOUCH POSITION│
                    ╲             ╱             │INTO EAST LONGITUDE AND NORTH │
                     ╲───────────╱              │LATITUDE COORDINATES          │
                          │ NO                  └──────────────┬───────────────┘
                          │                                    │
                          │                     ┌──────────────▼───────────────┐
                          │                     │SET MAP DISPLAY INFORMATION   │
                          │                     │  (D – 3)                     │
                          │                     └──────────────┬───────────────┘
                          │                                    │
                          │                            ┌───────▼──────┐
                          │                            │     END      │
                          │                            └──────────────┘
                     ╱────┴──────╲
                    ╱ TRANSIT SET ╲      YES   ┌──────────────────────────────┐
                   ╱   KEY         ╲──────────▶│SET PICTURE CENTER (EAST       │
                   ╲  TOUCHED ?    ╱           │LONGITUDE, NORTH LATITUDE )    │
                    ╲─────────────╱            │COORDINATES TO TRANSIT         │
                          │ NO                 │INFORMATION  (D – 2)           │
                          │                    └──────────────┬───────────────┘
                          │                                   │
                          │                    ┌──────────────▼───────────────┐
                          │                    │   REQUEST SEARCH START        │
                          │                    └──────────────┬───────────────┘
                          │                                   │
                          │                           ┌───────▼──────┐
                          │                           │     END      │
                          │                           └──────────────┘
                    ╱─────┴──────╲
                   ╱ DESTINATION  ╲     YES    ┌──────────────────────────────┐
                  ╱   SET KEY      ╲──────────▶│SET PICTURE CENTER (EAST       │
                  ╲  SELECTED ?    ╱           │LONGITUDE, NORTH LATITUDE )    │
                   ╲──────────────╱            │COORDINATES TO DESTINATION     │
                          ┊ NO                 │INFORMATION  (D – 1)           │
                          ┊                    └──────────────┬───────────────┘
                   ┌──────▼──────┐                            │
                   │     END     │             ┌──────────────▼───────────────┐
                   └─────────────┘             │   REQUEST SEARCH START        │
                                               └──────────────┬───────────────┘
                                                              │
                                                      ┌───────▼──────┐
                                                      │     END      │
                                                      └──────────────┘
```

# FIG.20 (a)

# FIG.20 (b)

# FIG.21 (a)

# FIG.21 (b)

# FIG.22

# FIG.23 (a)

# FIG.23 (b)

# FIG.24 (a)

MENU

SET DESTINATION     INDEX PLACE NAME

REGISTER POINT     INDEX TEL. NO.

ROUTE     CHANGE     DELETE

ADJUST VOLUME     OFF   LARGE | | | | | | | SMALL

# FIG.24 (b)

INDEX TEL. NO.     RETURN

INPUT FROM
TOLL NO.

| 1 | 2 | 3 |
| 4 | 5 | 6 |
| 7 | 8 | 9 |
| 0 | CLEAR |

# FIG.25 (a)

# FIG.25 (b)

# FIG.26

# FIG.27

# FIG.28

```
┌─────────────────────────────┐
│   CHANGE TO DETAILED MAP     │
└─────────────────────────────┘
              │
              ▼
         ╱─────────╲
       ╱  PRESENT SCALE ╲         NO
      ╱ COVERAGE WIDER THAN ╲ ──────────┐
       ╲    1/40000?    ╱               │
         ╲─────────╱                    │
              │                         │
              │ YES                     │
              ▼                         │
┌─────────────────────────────┐         │
│  CHANGE TO MAP OF 1/40000    │         │
└─────────────────────────────┘         │
              │                         │
              │◄────────────────────────┘
              ▼
┌─────────────────────────────┐
│            END              │
└─────────────────────────────┘
```

# FIG.29

```
      ┌─────────────────────────┐
      │  CHANGE TO DETAILED MAP  │
      └─────────────────────────┘
                   │
                   ▼
      ┌─────────────────────────┐
      │    CALCULATE SCALE (A)   │
      │        OF 1/16           │
      └─────────────────────────┘
                   │
                   ▼
              ╱─────────╲
         ╱   (A) MORE    ╲
       ╱ DETAILED THAN THE MOST ╲──────────────┐
        ╲   DETAILED MAP?      ╱                │
           ╲───────────╱                        │
                │ NO                         YES │
                ▼                                ▼
      ┌──────────────────────┐        ┌──────────────────────┐
      │ CHANGE TO SCALE OF (A)│        │  CHANGE TO THE MOST   │
      │                       │        │    DETAILED MAP       │
      └──────────────────────┘        └──────────────────────┘
                │                                │
                │◄───────────────────────────────┘
                ▼
           ┌─────────┐
           │   END   │
           └─────────┘
```

# FIG.30

```
        ┌─────────────────────────────┐
        │    CHANGE TO DETAILED MAP    │
        └──────────────┬──────────────┘
                       │
                       ▼
        ┌─────────────────────────────┐
        │       DETECT TOUCH AREA      │
        └──────────────┬──────────────┘
                       │
                       ▼
        ┌─────────────────────────────┐
        │  DETERMINE DETAILED SCALE    │
        │  (A) FROM HEIGHT (Y) AND     │
        │  WIDTH (X) OF TOUCH AREA     │
        └──────────────┬──────────────┘
                       │
                       ▼
                   ╱   (A) MORE   ╲
                  ╱  DETAILED THAN  ╲─────────────┐
                  ╲   THE MOST      ╱             │
                   ╲ DETAILED MAP? ╱              │
                       │                          │
                    NO │                      YES │
                       ▼                          ▼
        ┌─────────────────────┐   ┌─────────────────────┐
        │ CHANGE TO SCALE OF  │   │  CHANGE TO THE MOST │
        │        (A)          │   │     DETAILED MAP    │
        └──────────┬──────────┘   └──────────┬──────────┘
                   │                          │
                   ◄──────────────────────────┘
                   │
                   ▼
        ┌─────────────────────┐
        │         END         │
        └─────────────────────┘
```

# FIG.31

DETECT TOUCH AREA

ACQUIRE HORIZONTAL TOUCH
DETECT DATA

COUNT (X) OF HORIZONTAL
TOUCH DETECT DATA NO.

ACQUIRE VERTICAL TOUCH
DETECT DATA

COUNT (Y) OF VERTICAL
TOUCH DETECT DATA NO.

END

FINGER

VERTICAL

HORIZONTAL

# FIG.32

DETERMINE DETAILED SCALE (A) FROM HEIGHT (Y) AND WIDTH (X) OF TOUCH AREA

CALCULATE VERTICAL DISTANCE (Y') FROM HEIGHT (Y):
$Y'=(Y+1)\times bi$
bi:COEFFICIENT IN DISPLAY SCALE i

CALCULATE HORIZONTAL DISTANCE (X') FROM HEIGHT (X):
$X'=(X+1)\times ai$
ai:COEFFICIENT IN DISPLAY SCALE i

REDUCE LONGITUDINAL DISTANCE (Y') TO HORIZONTAL DISTANCE (X"):
$X"=Y'\times C$

$X' \geq X"$

NO

YES

DETERMINE DETAIL SCALE FROM X':
$A=f(X')$

DETERMINE DETAIL SCALE FROM X":
$A=f(X")$

END

WHY (Y+1) ?

SINCE THE TOUCH DETECT POSITION IS POINTED AND STEPPED. ITS TWO ADJOINTINGPOSITIONS ARE CONSIDERED WHEN OBSERVER AS AN AREA.

# FIG.33 (a)

# FIG.33 (b)